(19) Europäisches Patentamt
European Patent Office
Office européen des brevets

(11) **EP 4 212 559 A1**

(12) **EUROPEAN PATENT APPLICATION**
published in accordance with Art. 153(4) EPC

(43) Date of publication:
**19.07.2023 Bulletin 2023/29**

(21) Application number: **21866895.2**

(22) Date of filing: **13.09.2021**

(51) International Patent Classification (IPC):
**C08F 220/10** $^{(2006.01)}$

(52) Cooperative Patent Classification (CPC):
**C08F 220/10**

(86) International application number:
**PCT/JP2021/033508**

(87) International publication number:
**WO 2022/054938 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.09.2020 JP 2020153797**

(71) Applicant: SEKISUI CHEMICAL CO., LTD.
**Osaka-shi
Osaka
530-8565 (JP)**

(72) Inventors:
• **KAWADA, Shinji**
**Mishima-gun, Osaka 618-0021 (JP)**
• **ISHIKAWA, Yuki**
**Mishima-gun, Osaka 618-0021 (JP)**
• **IWAMOTO, Tatsuya**
**Saitama-shi, Saitama 338-0837 (JP)**
• **OKADA, Yuuki**
**Mishima-gun, Osaka 618-0021 (JP)**

(74) Representative: **Ter Meer Steinmeister & Partner
Patentanwälte mbB
Nymphenburger Straße 4
80335 München (DE)**

(54) **RESIN COMPOSITION, METHOD FOR PRODUCING RESIN COMPOSITION, AND CURED BODY**

(57) Provided is a resin composition capable of enhancing the application property, and enhancing the grindability and the oil resistance of a cured body. A resin composition according to the present invention comprises a (meth)acrylic monomer, and a (meth)acrylic polymer, the (meth)acrylic monomer includes a first (meth)acrylic monomer, the first (meth)acrylic monomer has a glass transition temperature of homopolymer thereof of 65°C or more and 110°C or less, a content of the first (meth)acrylic monomer in 100% by weight of the (meth) acrylic monomer is 50% by weight or more and 85% by weight or less, the (meth) acrylic polymer has a weight average molecular weight of 400000 or more and 1900000 or less, and a content of the (meth)acrylic polymer, relative to 100 parts by weight of the (meth)acrylic monomer is 5 parts by weight or more and 30 parts by weight or less.

[FIG. 1.]

(a)

(b)

EP 4 212 559 A1

**Description**

**TECHNICAL FIELD**

The present invention relates to a resin composition containing a (meth)acrylic monomer and a (meth)acrylic polymer. Also, the present invention relates to a method for producing the resin composition, and a cured body of the resin composition.

**BACKGROUND ART**

A resin molded body containing a (meth)acrylic polymer is widely used. For obtaining the resin molded body, a resin composition containing a (meth)acrylic monomer, and a resin composition containing a (meth)acrylic polymer and the like have been used.

The resin molded body is prepared, for example, by curing and molding a resin composition by suspension polymerization method and heat polymerization method and the like, or by, for example, grinding a cured body obtained by curing of a resin composition and processing the obtained powder.

In the following Patent Document 1, a methacrylic resin composition containing a (meth)acrylic polymer (P), an alcohol (A), and a hindered amine light stabilizer (B) is disclosed. The (meth)acrylic polymer (P) contains a repeating unit derived from alkyl methacrylate (M1), and a repeating unit derived from alkyl acrylate (M2) having an alkyl group with 1 to 6 carbon atoms as a side chain.

**Related Art Document**

**Patent Document**

Patent Document 1: JP 2020-094193 A

**SUMMARY OF THE INVENTION**

**PROBLEMS TO BE SOLVED BY THE INVENTION**

After applying a resin composition on the film, the applied resin composition can be cured to obtain a cured body. In order to enhance the production efficiency of the cured body, it is preferred to apply the resin composition in a relatively large thickness. However, in a conventional resin composition containing a (meth)acrylic monomer or a (meth)acrylic polymer, it is difficult to increase the thickness of application.

Also, in a cured body obtained with a conventional resin composition containing a (meth)acrylic monomer or a (meth)acrylic polymer, the cured body itself has adhesiveness, so that blocking is easy to occur, and the grindability can be poor.

Further, a cured body obtained with a conventional resin composition containing a (meth)acrylic monomer or a (meth)acrylic polymer can be poor in oil resistance. Therefore, for example, when other layer is laminated on the surface of the cured body, a low molecular component contained in the other layer migrates to the cured body, resulting that desired functions cannot be exerted.

It is an object of the present invention to provide a resin composition capable of enhancing the application property, and enhancing the grindability and oil resistance of a cured body. Also, it is an object of the present invention to provide a method for producing the resin composition, and a cured body of the resin composition.

**MEANS FOR SOLVING THE PROBLEMS**

According to a broad aspect of the present invention, there is provided a resin composition comprising a (meth)acrylic monomer, and a (meth)acrylic polymer, the (meth)acrylic monomer including a first (meth)acrylic monomer, the first (meth)acrylic monomer having a glass transition temperature of homopolymer thereof of 65°C or more and 110°C or less, a content of the first (meth)acrylic monomer in 100% by weight of the (meth)acrylic monomer being 50% by weight or more and 85% by weight or less, the (meth)acrylic polymer having a weight average molecular weight of 400000 or more and 1900000 or less, a content of the (meth)acrylic polymer, relative to 100 parts by weight of the (meth)acrylic monomer being 5 parts by weight or more and 30 parts by weight or less.

In a specific aspect of the resin composition according to the present invention, the (meth)acrylic monomer includes a second (meth)acrylic monomer, the second (meth)acrylic monomer has a glass transition temperature of homopolymer thereof of -70°C or more and -30°C or less, and a content of the second (meth)acrylic monomer in 100% by weight of the (meth)acrylic monomer is 39% by weight or less.

In a specific aspect of the resin composition according to the present invention, the (meth)acrylic monomer includes a cyclic (meth) acrylic monomer that contains an oxygen atom in a heterocycle.

In a specific aspect of the resin composition according to the present invention, the (meth)acrylic monomer includes a third (meth)acrylic monomer, and the third (meth)acrylic monomer has a glass transition temperature of homopolymer thereof of more than -30°C and less than 65°C.

In a specific aspect of the resin composition according to the present invention, the third (meth)acrylic monomer includes a cyclic (meth)acrylic monomer that contains an oxygen atom in a heterocycle.

In a specific aspect of the resin composition according to the present invention, a polymer polymerized from the (meth)acrylic monomer has a glass transition temperature of 40°C or more and 80°C or less.

In a specific aspect of the resin composition according to the present invention, the resin composition comprises a polymerization initiator, and the polymerization initiator is a photopolymerization initiator.

According to a broad aspect of the present invention, there is provided a method for producing the aforementioned resin composition, the method comprising a step of polymerizing a first composition containing a (meth)acrylic monomer and a polymerization initiator, and a step of suspending polymerization reaction of the first composition to obtain a resin composition containing a (meth)acrylic monomer and a (meth)acrylic polymer.

According to a broad aspect of the present invention, there is provided a method for producing the aforementioned resin composition, the method comprising a step of polymerizing a first composition containing a (meth)acrylic monomer and a polymerization initiator to obtain a second composition containing a (meth)acrylic polymer, and a step of mixing the second composition and a (meth)acrylic monomer to obtain a resin composition containing a (meth)acrylic monomer and a (meth)acrylic polymer.

According to a broad aspect of the present invention, there is provided a cured body obtained by curing the aforementioned resin composition.

In a specific aspect of the cured body according to the present invention, the cured body is in a sheet-like form.

In a specific aspect of the cured body according to the present invention, the cured body has a gel fraction of 30% by weight or less.

In a specific aspect of the cured body according to the present invention, the (meth)acrylic polymer contained in the cured body has a weight average molecular weight of 500000 or more and 2000000 or less.

## EFFECT OF THE INVENTION

A resin composition according to the present invention contains a (meth)acrylic monomer, and a (meth)acrylic polymer, and the (meth)acrylic monomer includes a first (meth)acrylic monomer. In the resin composition according to the present invention, the first (meth)acrylic monomer has a glass transition temperature of homopolymer thereof of 65°C or more and 110°C or less, and a content of the first (meth)acrylic monomer in 100% by weight of the (meth) acrylic monomer is 50% by weight or more and 85% by weight or less. In the resin composition according to the present invention, the (meth)acrylic polymer has a weight average molecular weight of 400000 or more and 1900000 or less. In the resin composition according to the present invention, a content of the (meth)acrylic polymer, relative to 100 parts by weight of the (meth)acrylic monomer is 5 parts by weight or more and 30 parts by weight or less. In the resin composition according to the present invention, since the above configuration is provided, it is possible to enhance the application property, and it is possible to enhance the grindability and the oil resistance of the cured body.

## BRIEF DESCRIPTION OF DRAWINGS

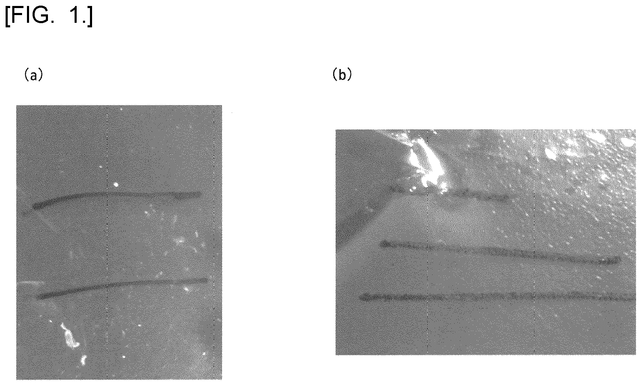

[Fig. 1] Figs. 1(a) and (b) are examples of pictures after evaluation of the oil resistance of a cured body.

## MODES FOR CARRYING OUT THE INVENTION

Hereinafter, the details of the present invention will be described.

A resin composition according to the present invention contains a (meth)acrylic monomer (the entirety of (meth)acrylic monomer, hereinafter, also referred to as a (meth)acrylic monomer (M)), and a (meth)acrylic polymer. In the resin composition according to the present invention, the (meth)acrylic monomer (M) includes a first (meth)acrylic monomer (first (meth)acrylic monomer(M1)). In the resin composition according to the present invention, the first (meth)acrylic monomer has a glass transition temperature of homopolymer thereof of 65°C or more and 110°C or less, and a content of the first (meth)acrylic monomer in 100% by weight of the (meth)acrylic monomer (M) is 50% by weight or more and 85% by weight or less. In the resin composition according to the present invention, the (meth)acrylic polymer has a weight average molecular weight of 400000 or more and 1900000 or less. In the resin composition according to the present invention, a content of the (meth)acrylic polymer, relative to 100 parts by weight of the (meth) acrylic monomer (M) is 5 parts by weight or more and 30 parts by weight or less.

In the resin composition according to the present invention, since the above configuration is provided, it is possible to enhance the application property, and it is possible to enhance the grindability and the oil resistance of the cured body.

The resin composition according to the present invention can be applied in a relatively large thickness because the application property can be enhanced. For example, the resin composition according to the present invention can be applied in a thickness of 1 mm or more, and the shape of the applied resin composition layer can be favorably maintained. Also, it is possible to reduce the rate of change in thickness of the cured product layer (cured body) obtained by curing after application, to the thickness of the applied resin composition layer. Therefore, it is possible to enhance the production efficiency of the cured body.

In the resin composition according to the present invention, since the first (meth)acrylic monomer having a relatively high glass transition temperature is used in a relatively large amount, it is possible to control the adhesiveness of the cured body to low level, and it is possible to enhance the grindability.

Also, since the oil resistance can be enhanced in the resin composition according to the present invention, for example, even when other layer is arranged on a surface of the sheet-like cured body, a low molecular component contained in the other layer is less likely to migrate to the cured body, resulting that the function exerted by the laminate of the cured body and the other layer can be kept high.

Hereinafter, details of each ingredient used in the resin composition according to the present invention will be described. In the present specification, "(meth)acrylate" means either one or both of "acrylate" and "methacrylate", and "(meth)acrylic" means either one or both of "acrylic" and "methacrylic".

((Meth)acrylic monomer (M))

The resin composition contains a (meth)acrylic monomer (M). It is preferred that the (meth)acrylic monomer (M) have a (meth)acryloyl group.

The (meth)acrylic monomer (M) may include a monofunctional (meth)acrylic monomer, or may include a multifunctional (meth)acrylic monomer, and may include both a monofunctional (meth)acrylic monomer and a multifunctional (meth)acrylic monomer.

Examples of the (meth)acrylic monomer (M) include a (meth)acrylic ester and an N-substituted acrylamide having an amide group.

Examples of the (meth)acrylic ester include an alicyclic (meth)acrylic ester, a (meth)acrylic ester having a cyclic ether structure, a (meth)acrylic ester having an aromatic ring, a (meth)acrylic ester having a polar group, and an acyclic (meth)acrylic ester having 6 or less carbon atoms in the side chain, and the like.

Examples of the alicyclic (meth)acrylic ester include isobornyl (meth)acrylate, cyclohexyl (meth)acrylate, and dicyclopentanyl (meth)acrylate, and the like.

Examples of the (meth)acrylic ester having a cyclic ether structure include glycidyl (meth)acrylate, 2-hydroxyethyl (meth)acrylate glycidyl ether, 3-hydroxypropyl (meth)acrylate glycidyl ether, 4-hydroxybutyl (meth)acrylate glycidyl ether, 5-hydroxypentyl (meth)acrylate glycidyl, and 6-hydroxyhexyl (meth)acrylate glycidyl ether; (3-methyloxetane-3-yl)methyl (meth)acrylate, (3-propyloxetane-3-yl)methyl (meth)acrylate, (3-ethyloxetane-3-yl)methyl (meth)acrylate, (3-butyloxetane-3-yl)methyl (meth)acrylate, (3-ethyloxetane-3-yl)ethyl (meth)acrylate, (3-ethyloxetane-3-yl)propyl (meth)acrylate, (3-ethyloxetane-3-yl)butyl (meth)acrylate, (3-ethyloxetane-3-yl)pentyl (meth)acrylate, and (3-ethyloxetane-3-yl)hexyl (meth)acrylate; tetrahydrofurfuryl (meth)acrylate, (2,2-dimethyl-1,3-dioxolane-4-yl)methyl (meth)acrylate, (2-methyl-2-ethyl-1,3-dioxolane-4-yl)methyl (meth)acrylate, (2-methyl-2-isobutyl-1,3-dioxolane-4-yl)methyl (meth)acrylate, (2-cyclohexyl-1,3-dioxolane-4-yl)methyl (meth)acrylate, and tetrahydrofurfuryl alcohol (meth)acrylic acid multimer ester; tetrahydro-2H-pyran-2-yl-(meth)acrylate, 2-{1-[(tetrahydro-2H-pyran-2-yl)oxy]-2-methylpropyl} (meth)acrylate, cyclic trimethylolpropane formal (meth)acrylate, and (meth)acryloyl morpholine and the like.

Examples of the (meth)acrylic ester having an aromatic ring include benzyl (meth)acrylate, phenoxyethyl (meth)acrylate, and phenoxypolyethyleneglycol (meth)acrylate, and the like.

Examples of the (meth)acrylic ester having a polar group include (meth)acrylic esters having a hydroxyl group, an amide group, an amino group, an isocyanate group, and a carboxyl group or the like as the polar group.

Examples of the (meth)acrylic ester having a hydroxyl group include 2-hydroxyethyl (meth)acrylate, hydroxypropyl (meth)acrylate, 4-hydroxybutyl (meth)acrylate, and 2-hydroxybutyl (meth)acrylate and the like.

Examples of the (meth)acrylic ester having an isocyanate group include 2-isocyanato ethyl(meth)acrylate, triallylisocyanurate, and derivatives thereof and the like.

Examples of the (meth)acrylic ester having a carboxyl group include (meth)acrylic acid, $\omega$-carboxy-polycaprolactone mono(meth)acrylate, and 2-(meth)acryloyloxyethylsuccinic acid.

The above-described (meth)acrylic ester may be a polycarboxylic ester having a (meth)acryloyl group. Examples of the polycarboxylic ester having a (meth)acryloyl group include 2-(meth)acryloyloxyethyl succinate and the like.

Examples of the acyclic (meth)acrylic ester having 6 or less carbon atoms in the side chain include methyl (meth)acrylate, ethyl (meth)acrylate, propyl (meth)acrylate, butyl (meth)acrylate, isobutyl (meth)acrylate, and t-butyl (meth)acrylate and the like.

Examples of the N-substituted acrylamide having an amide group include N,N-dimethylaminopropyl (meth)acrylamide, N,N-dimethyl (meth)acrylamide, (meth)acryloyl morpholine, N-isopropyl (meth)acrylamide, and N-hydroxyethyl (meth)acrylamide and the like.

Examples of the (meth)acrylic ester include besides the compounds as recited above, diethyleneglycol monoethylether (meth)acrylate, 3-methoxybutyl (meth)acrylate, 2-(meth)acryloyloxyethyl-2-hydroxypropylphthalate, 2-(meth)acryloyloxyethyl-2-hydroxylpropylphthalate, ethylene glycol di(meth)acrylate, diethylene glycol di(meth)acrylate, tetraethylene glycol di(meth)acrylate, 1,6-hexane diol di(meth)acrylate, 1,9-nonane diol di(meth)acrylate, polytetramethylene glycol di(meth)acrylate, neopentyl glycol di(meth)acrylate, 1,3-butylene glycol di(meth)acrylate, 2,2-bis[4-((meth)acryloxyethoxy)phenyl]propane di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(2-(meth)acryloyloxyethyl)phosphate, tetramethylol methane tri(meth)acrylate, tetramethylol propane tetra(meth)acrylate, and derivatives thereof and the like.

The (meth)acrylic monomer (M) includes a first (meth)acrylic monomer having a glass transition temperature of homopolymer thereof of 65°C or more and 110°C or less.

It is preferred that the (meth)acrylic monomer (M) include a second (meth)acrylic monomer (second (meth)acrylic monomer(M2)) having a glass transition temperature of homopolymer thereof of - 70°C or more and -30°C or less.

It is preferred that the (meth)acrylic monomer (M) include a third (meth)acrylic monomer (third (meth)acrylic monomer(M3)) having a glass transition temperature of homopolymer thereof of more than -30°C and less than 65°C.

The (meth)acrylic monomer (M) may include the first (meth)acrylic monomer and the second (meth)acrylic monomer, and may include the first (meth)acrylic monomer and the third (meth)acrylic monomer. The (meth)acrylic monomer (M) may include the first (meth)acrylic monomer, the second (meth)acrylic monomer, and the third (meth)acrylic monomer. From the viewpoint of exerting the effect of the present invention more effectively, it is preferred that the (meth)acrylic monomer (M) include the first (meth)acrylic monomer, the second (meth)acrylic monomer, and the third (meth)acrylic monomer.

From the viewpoint of further enhancing the oil resistance of the cured body, it is preferred that the (meth)acrylic monomer (M) include a cyclic (meth)acrylic monomer containing an oxygen atom in a heterocycle. The cyclic (meth) acrylic monomer containing an oxygen atom in a heterocycle may be the first (meth) acrylic monomer, may be the second (meth)acrylic monomer, and may be the third (meth)acrylic monomer.

Hereinafter, the first, second, and third (meth)acrylic monomers will be further described.

<First (meth)acrylic monomer>

The (meth)acrylic monomer (M) includes the first (meth)acrylic monomer. Therefore, the resin composition contains the first (meth)acrylic monomer. The first (meth)acrylic monomer has a glass transition temperature of homopolymer thereof of 65°C or more and 110°C or less. The first (meth)acrylic monomer is not particularly limited as long as it is a (meth)acrylic monomer having a glass transition temperature of homopolymer thereof of 65°C or more and 110°C or less. Of the aforementioned (meth)acrylic monomers, a (meth)acrylic monomer having a glass transition temperature of homopolymer thereof of 65°C or more and 110°C or less can be used as the first (meth)acrylic monomer. One kind of the first (meth)acrylic monomer may be used alone, and two or more kinds thereof may be used in combination.

The first (meth)acrylic monomer has a glass transition temperature of homopolymer thereof of 65°C or more, preferably 68°C or more, more preferably 70°C or more, further preferably 72°C or more. The first (meth)acrylic monomer has a glass transition temperature of homopolymer thereof of 110°C or less, preferably 105°C or less, more preferably 100°C or less, further preferably 95°C or less. When the glass transition temperature is the above lower limit or more and the above upper limit or less, it is possible to exert the effect of the present invention more effectively, and in particular, coalescence of the cured body is effectively suppressed, and the grindability can be further enhanced.

Glass transition temperature of homopolymer of the first (meth)acrylic monomer, glass transition temperature of homopolymer of the later-described second, third, and fourth (meth)acrylic monomers, and glass transition temperature of a polymer polymerized from the (meth)acrylic monomer (M) are determined by viscoelasticity measurement. The viscoelasticity measurement is conducted specifically in the following manner. It is preferred that glass transition temperature of each of homopolymer of the first (meth)acrylic monomer, homopolymer of the second (meth)acrylic monomer, homopolymer of the third (meth)acrylic monomer, and homopolymer of the fourth (meth)acrylic monomer be glass transition temperature of homopolymer having a weight average molecular weight of 500000 or more and 1800000 or less.

Homopolymers of the first, second, third, and fourth (meth)acrylic monomers for measuring glass transition temperature can be obtained in the following manner. One hundred parts by weight of a (meth)acrylic monomer, and 0.2 parts by weight of a photopolymerization initiator are stirred with a planetary stirrer (for example, "Awatori Rentaro" available from THINKY) to obtain a photopolymerizable composition. The obtained photopolymerizable composition is sandwiched between two PET (polyethylene terephthalate) sheets having subjected to a mold release treatment on one side, to form a photopolymerizable composition layer having a thickness of 100 um. The photopolymerizable composition layer is irradiated with ultraviolet rays with an irradiation energy of 3000 mJ/cm$^2$ at an illuminance of 5 mW/cm$^2$, using a chemical lamp (for example, "Linear starter type, model 20, FL20SBL" available from TOSHIBA CORPORATION) to cure the photopolymerizable composition. Then, the two PET sheets having subjected to a mold release treatment on one side are peeled off to obtain a homopolymer (cured product) of the first, second, third, or fourth (meth)acrylic monomer.

Then, viscoelasticity is measured using a viscoelasticity measuring device (for example, "ARES-G2" available from TA Instruments) for a homopolymer of the first, second, third or fourth (meth)acrylic monomer, or for a polymer polymerized from the (meth)acrylic monomer (M). A parallel plate with a diameter of 8 mm is used as a jig, and the measurement is performed in a shearing mode under the condition in which the temperature is increased from -100°C to 200°C at a temperature increasing rate of 3°C/minute and under the condition of a frequency of 1 Hz and a strain of 1%. In the measurement results obtained, the peak temperature of the loss tangent is defined as the glass transition temperature Tg (°C).

The first (meth)acrylic monomer is preferably (meth)acrylic ester, or 2-hydroxyethyl (meth)acrylate, and is more preferably isobornyl (meth)acrylate, N,N-dimethylaminopropyl (meth)acrylamide, or N,N-dimethyl (meth)acrylamide.

In the resin composition, a content of the first (meth)acrylic monomer in 100% by weight of the (meth)acrylic monomer (M) is 50% by weight or more and 85% by weight or less. If the content of the first (meth)acrylic monomer is less than 50% by weight, the grindability of the cured body can deteriorate. If the content of the first (meth)acrylic monomer is more than 85% by weight, the oil resistance of the cured body can deteriorate.

In the resin composition, a content of the first (meth)acrylic monomer in 100% by weight of the (meth)acrylic monomer (M) is preferably 55% by weight or more, more preferably 60% by weight or more, and is preferably 84% by weight or less. When the content of the first (meth)acrylic monomer is the above lower limit or more, it is possible to further enhance the grindability of the cured body. When the content of the first (meth)acrylic monomer is the above upper limit or less, it is possible to further enhance the oil resistance of the cured body. From the viewpoint of further enhancing the oil resistance of the cured body, in the resin composition, a content of the first (meth)acrylic monomer in 100% by weight of the (meth)acrylic monomer (M) may be 80% by weight or less, may be 78% by weight or less, may be 75% by weight or less, and may be 70% by weight or less.

<Second (meth)acrylic monomer>

It is preferred that the (meth)acrylic monomer (M) include the second (meth)acrylic monomer. Therefore, it is preferred that the resin composition contain the second (meth)acrylic monomer. The second (meth)acrylic monomer has a glass transition temperature of homopolymer thereof of -70°C or more and -30°C or less. The second (meth)acrylic monomer is not particularly limited as long as it is a (meth)acrylic monomer having a glass transition temperature of homopolymer thereof of -70°C or more and -30°C or less. Of the aforementioned (meth)acrylic monomers, a (meth)acrylic monomer having a glass transition temperature of homopolymer thereof of -70°C or more and -30°C or less can be used as the second (meth)acrylic monomer. One kind of the second (meth) acrylic monomer may be used alone, and two or more kinds thereof may be used in combination.

The second (meth)acrylic monomer has a glass transition temperature of homopolymer thereof of -70°C or more, preferably -60°C or more, more preferably -55°C or more, further preferably -50°C or more. The second (meth)acrylic monomer has a glass transition temperature of homopolymer thereof of -30°C or less, preferably -33°C or less, more preferably -38°C or less, further preferably -40°C or less. When the glass transition temperature is the above lower limit or more and the above upper limit or less, it is possible to exert the effect of the present invention more effectively.

It is preferred that the second (meth)acrylic monomer be a multi-branched (meth)acrylic monomer, a (meth)acrylic monomer having a carbon chain of 4 or more carbon atoms, or an etheric (meth)acrylic monomer. The second (meth)acrylic monomer is preferably butyl (meth)acrylate, carbitol (meth)acrylate, or isononyl (meth)acrylate, and more preferably isodecyl (meth)acrylate or 2-ethylhexyl (meth)acrylate.

In the resin composition, a content of the second (meth)acrylic monomer in 100% by weight of the (meth)acrylic monomer (M) is preferably 2% by weight or more, more preferably 5% by weight or more, and is preferably 39% by weight or less, more preferably 25% by weight or less. When the content of the second (meth)acrylic monomer is the above lower limit or more and the above upper limit or less, it is possible to exert the effect of the present invention more effectively.

<Third (meth)acrylic monomer>

It is preferred that the (meth)acrylic monomer (M) include the third (meth)acrylic monomer. Therefore, it is preferred that the resin composition include the third (meth)acrylic monomer. The third (meth)acrylic monomer has a glass transition temperature of homopolymer thereof of more than -30°C and less than 65°C. The third (meth)acrylic monomer is not particularly limited as long as it is a (meth) acrylic monomer having a glass transition temperature of homopolymer thereof of more than -30°C and less than 65°C. Of the aforementioned (meth)acrylic monomers, a (meth)acrylic monomer having a glass transition temperature of homopolymer thereof of more than -30°C and less than 65°C can be used as the third (meth)acrylic monomer. One kind of the third (meth)acrylic monomer may be used alone, and two or more kinds thereof may be used in combination.

The third (meth)acrylic monomer has a glass transition temperature of homopolymer thereof of more than -30°C, preferably -15°C or more, more preferably 0°C or more, further preferably 10°C or more. The third (meth)acrylic monomer has a glass transition temperature of homopolymer thereof of less than 65°C, preferably 60°C or less, more preferably 55°C or less, further preferably 50°C or less. When the glass transition temperature is the above lower limit or more and the above upper limit or less, it is possible to exert the effect of the present invention more effectively.

It is preferred that the third (meth)acrylic monomer include a cyclic (meth)acrylic monomer containing an oxygen atom in a heterocycle, and it is more preferred that the third (meth)acrylic monomer be a cyclic (meth)acrylic monomer containing an oxygen atom in a heterocycle. In this case, it is possible to further enhance the oil resistance of the cured body.

It is preferred that the third (meth)acrylic monomer be (meth)acryloyl morpholine, (3-ethyloxetan-3-yl)butyl (meth)acrylate, or (3-ethyloxetan-3-yl)methyl (meth)acrylate. It is more preferred that the third (meth)acrylic monomer be (3-ethyloxetan-3-yl)propyl (meth)acrylate, tetrahydrofurfuryl (meth)acrylate, or cyclic trimethylolpropane formal (meth)acrylate. In this case, it is possible to further enhance the oil resistance of the cured body.

In the resin composition, a content of the third (meth)acrylic monomer in 100% by weight of the (meth)acrylic monomer (M) is preferably 3% by weight or more, more preferably 8% by weight or more, and is preferably 25% by weight or less, more preferably 20% by weight or less. When the content of the third (meth)acrylic monomer is the above lower limit or more and the above upper limit or less, it is possible to exert the effect of the present invention more effectively.

<Other details of (meth)acrylic monomer (M)>

The (meth)acrylic monomer (M) may include or need not include a fourth (meth)acrylic monomer (fourth (meth)acrylic monomer (M4)) other than the above first, second, and third (meth)acrylic monomers. The fourth (meth)acrylic monomer is a (meth)acrylic monomer having a glass transition temperature of homopolymer thereof of less than -70°C or more than 110°C.

In the resin composition, the combination of the kind and the content of the (meth)acrylic monomer (M) is preferably a combination that satisfies the following configuration. That is, a polymer polymerized from the (meth)acrylic monomer (M) has a glass transition temperature of preferably 40°C or more, more preferably 45°C or more, and is preferably 80°C or less, more preferably 70°C or less. When the glass transition temperature is the above lower limit or more and the above upper limit or less, it is possible to exert the effect of the present invention more effectively.

A content of the (meth)acrylic monomer (M) in 100% by weight of the resin composition is preferably 3% by weight or more, more preferably 5% by weight or more and is preferably 30% by weight or less, more preferably 20% by weight or less. When the content of the (meth)acrylic monomer (M) is the above lower limit or more and the above upper limit or less, it is possible to exert the effect of the present invention more effectively.

((Meth)acrylic polymer)

The resin composition contains a (meth)acrylic polymer. The (meth)acrylic polymer has a weight average molecular weight of 400000 or more and 1900000 or less. That is, the resin composition contains a (meth)acrylic polymer having a weight average molecular weight of 400000 or more and 1900000 or less. One kind of the (meth) acrylic polymer may be used alone, and two or more kinds thereof may be used in combination.

The (meth)acrylic polymer may be a thermal polymer, or may be a photopolymer.

The weight average molecular weight of the (meth)acrylic polymer is 400000 or more, preferably 500000 or more, and more preferably 600000 or more. The weight average molecular weight of the (meth)acrylic polymer is 1900000 or less, preferably 1600000 or less, and more preferably 1400000 or less. When the weight average molecular weight is the above lower limit or more and the above upper limit or less, it is possible to exert the effect of the present invention more effectively. When the weight average molecular weight is the above upper limit or less, it is possible to favorably dissolve the (meth)acrylic polymer in the resin composition.

The weight average molecular weight means a weight average molecular weight, calculated on the standard sample equivalent basis, by gel permeation chromatography (GPC) measurement. Examples of the standard sample include polystyrene, polymethyl methacrylate, and polyethylene glycol, and the like. For example, for measurement of a weight average molecular weight on the polystyrene equivalent basis, GPC measurement for a polystyrene standard sample having a known molecular weight is conducted.

When the polystyrene standard sample is used as the standard sample, nine samples having the following weight average molecular weights are used as the polystyrene standard sample ("Shodex Standard SM-105" available from SHOWA DENKO K.K.). Standard sample No. (weight average molecular weight) of each sample: S-1.3 (1270), S-3.2 (3180), S-6.9 (6,940), S-22 (21,800), S-53 (52,500), S-333 (333,000), S-609 (609,000), S-1345 (1,350,000), S-2704 (2,700,000).

An approximate line obtained by plotting molecular weight with respect to elution time of a peak top of each standard sample is used as a calibration curve. The (meth)acrylic polymer is dissolved in a mixed solvent of dimethylformamide (DMF) and tetrahydrofuran (THF) (DMF : THF = 80% by weight : 20% by weight) to obtain a solution of 0.2% by weight (content of (meth)acrylic polymer). The obtained solution is filtered through a filter with a pore size of 0.2 um. Preferably, using a solution in which 10 mM lithium bromide is added to the filtrate as an eluent, the solution is analyzed with a GPC apparatus, and weight average molecular weight is measured. The (meth)acrylic polymer may be dissolved in tetrahydrofuran (THF) in place of the mixed solvent of dimethylformamide (DMF) and tetrahydrofuran (THF) (DMF : THF = 80% by weight : 20% by weight) to prepare a solution of 0.2% by weight (content of (meth)acrylic polymer), and tetrahydrofuran (THF) may be used as an eluent. When the (meth) acrylic polymer has an amide group, a solution of 0.2% by weight may be prepared by dissolving in dimethylformamide (DMF) or N-methylpyrrolidone in place of the mixed solvent with tetrahydrofuran (THF). In this case, as an eluent, lithium bromide-containing dimethylformamide or lithium bromide-containing N-methylpyrrolidone may be used.

As the GPC apparatus, a GPC apparatus (available from Waters, RI: 2414, autosampler alliance: e2695, guard column: KF-G, column: two serially arranged Shodex KF806L) and the like can be recited. When the (meth)acrylic polymer has an amide group, it is preferred to change the column to "HSPgelRT MB-M 6.0 × 150 mm" in the apparatus.

The (meth)acrylic polymer may have a structural unit derived from one kind of (meth)acrylic monomer, may have a structural unit derived from two kinds of (meth)acrylic monomer, and may have a structural unit derived from two or more kinds of (meth) acrylic monomer. The (meth)acrylic polymer may have a structural unit derived from three kinds of (meth)acrylic monomer, may have a structural unit derived from three or more kinds of (meth)acrylic monomer, may have a structural unit derived from four kinds of (meth)acrylic monomer, and may have a structural unit derived from four or more kinds of (meth)acrylic monomer. The (meth)acrylic polymer may have a structural unit derived from five kinds of (meth)acrylic monomer, and may have a structural unit derived from five or more kinds of (meth)acrylic monomer.

It is preferred that the (meth)acrylic polymer have a structural unit derived from the first (meth)acrylic monomer. It is also preferred that the (meth)acrylic polymer have a structural unit derived from the first (meth)acrylic monomer, and a structural unit derived from the second (meth)acrylic monomer, and it is also preferred that the (meth)acrylic polymer have a structural unit derived from the first (meth)acrylic monomer and a structural unit derived from the third (meth) acrylic monomer. It is more preferred that the (meth)acrylic polymer have a structural unit derived from the first (meth)acrylic monomer, a structural unit derived from the second (meth)acrylic monomer, and a structural unit derived from the third (meth)acrylic monomer.

A content of the structural unit derived from the first (meth)acrylic monomer in 100% by weight of the (meth)acrylic polymer is preferably 40% by weight or more, more preferably 60% by weight or more, and is preferably 100% by weight or less, more preferably 80% by weight or less. When the content of the structural unit derived from the first (meth)acrylic monomer is the above lower limit or more and the above upper limit or less, it is possible to control the adhesiveness of the cured body to further low, and it is possible to further enhance the grindability.

A content of the structural unit derived from the second (meth)acrylic monomer in 100% by weight of the (meth)acrylic polymer is preferably 2% by weight or more, more preferably 4% by weight or more, and is preferably 30% by weight or less, more preferably 20% by weight or less. When the content of the structural unit derived from the second (meth)acrylic monomer is the above lower limit or more and the above upper limit or less, it is possible to exert the effect of the present invention more effectively.

A content of the structural unit derived from the third (meth)acrylic monomer in 100% by weight of the (meth)acrylic polymer is preferably 3% by weight or more, more preferably 5% by weight or more, and is preferably 40% by weight or less, more preferably 30% by weight or less. When the content of the structural unit derived from the third (meth)acrylic monomer is the above lower limit or more and the above upper limit or less, it is possible to exert the effect of the present invention more effectively.

In the resin composition, a content of the (meth)acrylic polymer, relative to 100 parts by weight of the (meth)acrylic monomer (M) is 5 parts by weight or more and 30 parts by weight or less. If the content of the (meth)acrylic polymer is less than 5 parts by weight, the application property can deteriorate. If the content of the (meth)acrylic polymer is more than 30 parts by weight, the grindability of the cured body can deteriorate, the oil resistance can deteriorate, and the acrylic polymer can become insoluble.

In the resin composition, a content of the (meth)acrylic polymer, relative to 100 parts by weight of the (meth)acrylic monomer (M) is preferably 7 parts by weight or more and preferably 20 parts by weight or less. When the content of the (meth)acrylic polymer is the above lower limit or more, it is possible to further enhance the application property. When the content of the (meth)acrylic polymer is the above upper limit or less, it is possible to further enhance the grindability and the oil resistance of the cured body.

(Polymerization initiator)

It is preferred that the resin composition contain a polymerization initiator. Only one kind of the polymerization initiator may be used, and two or more kinds thereof may be used in combination.

Examples of the polymerization initiator include a photopolymerization initiator and a thermal polymerization initiator. The resin composition may contain a photopolymerization initiator, may contain a thermal polymerization initiator, and may contain a photopolymerization initiator and a thermal polymerization initiator.

Examples of the photopolymerization initiator include 2,2-dimethoxy-1,2-diphenylethane-1-one, 2-methyl-1-(4-methylthiophenyl)-2-morpholinopropane-1-one, 2-benzyl-2-dimethylamino-1-(4-morpholinophenyl)-butanone-1, 2-(dimethylamino)-2-[(4-methylphenyl)methyl]-1-[4-(4-morpholinyl)phenyl]-1-butanone, 2,4,6-trimethylbenzoyl-diphenylphosphine oxide, bis(2,4,6-trimethylbenzoyl)-phenylphosphine oxide, bis($\eta$5-2,4-cyclopentadiene-1-yl)-bis(2,6-difluoro-3-(1H-pyrrole-1-yl)-phenyl)titanium, 2-methyl-1-(4-methylthiophenyl)-2-morpholinopropane-1-one, 2-benzyl-2-dimethylamino-1-(4-morpholinophenyl)-butanone-1, 2-(dimethylamino)-2-[(4-methylphenyl)methyl]-1-[4-(4-morpholinyl)phenyl]-1-butanone, diethoxyacetophenone, 2-hydroxy-2-methyl-1-phenylpropane-1-one, benzyldimethylketal, 4-(2-hydroxyethoxy)phenyl-(2-hydroxy-2-propyl)ketone, 1-hydroxycyclohexylphenylketone, 2-methyl-2-morpholino(4-thiomethylphenyl)propane-1-one, 2-benzyl-2-dimethylamino-1-(4-morpholinophenyl)butanone, 2-hydroxy-2-methyl-1-[4-(1-methylvinyl)phenyl]propanone oligomer, benzoin, benzoin methyl ether, benzoin ethyl ether, benzoin isopropyl ether, benzoin isobutyl ether, benzophenone, methyl o-benzoylbenzoate, 4-phenylbenzophenone, 4-benzoyl-4'-methyl-diphenylsulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzene methanaminium bromide, (4-benzoylbenzyl)trimethylammonium chloride, 2-isopropylthioxanthone, 4-isopropylthioxanthone, 2,4-diethylthioxanthone, 2,4-dichlorothioxanthone, 1-chloro-4-propoxythioxanthone, 2-(3-dimethylamino-2-hydroxy)-3,4-dimethyl-9H-thioxanthone-9-one methochloride, 2,4,6-trimethylbenzoyl-diphenylphosphine oxide, bis(2,6-dimethoxybenzoyl)-2,4,4-trimethyl-pentylphosphine oxide, bis(2,4,6-trimethylbenzoyl)-phenylphosphine oxide, and triphenylmethylium tetrakis(pentafluorophenyl) borate and the like. Only one kind of the photopolymerization initiator may be used, and two or more kinds thereof may be used in combination.

Examples of the thermal polymerization initiator include azoic thermal polymerization initiators such as 2,2'-azobisisobutyronitrile, 2,2'-azobis-2,4-dimethylvaleronitrile, 2,2'-azobiscyclohexylnitrile, 1,1'-azobis(cyclohexane-1-carbonitrile), 2-phenylazo-4-methoxy-2,4-dimethylvaleronitrile, dimethyl-2,2'-azobisisobutylate, 2,2'-azobis(2-methylbutyronitrile) and the like, and peroxide thermal polymerization initiators such as benzoyl peroxide, 2,4-dichlorobenzoyl peroxide, 1-butyl peroxy-2-ethylhexanoate, 1-butyl peroxy-3,5,5-trimethylhexanoate, tert-butyl peroxybenzoate and the like. These thermal polymerization initiators are thermal decomposition type polymerization initiators. Only one kind of the thermal polymerization initiator may be used, and two or more kinds thereof may be used in combination.

From the viewpoint of advancing the curing reaction of the resin composition favorably, and obtaining the cured body favorably, the polymerization initiator preferably includes a photopolymerization initiator or a thermal polymerization initiator, more preferably includes a photopolymerization initiator, and more preferably be a photopolymerization initiator.

In the resin composition, a content of the polymerization initiator, relative to 100 parts by weight of the (meth)acrylic monomer (M) is preferably 0.001 parts by weight or more, more preferably 0.01 parts by weight or more, and is preferably 5 parts by weight or less, more preferably 3 parts by weight or less. When the content of the polymerization initiator is the above lower limit or more and the above upper limit or less, it is possible to advance the curing reaction of the resin composition more favorably, and it is possible to obtain the cured body more favorably.

A content of the polymerization initiator in 100% by weight of the resin composition is preferably 0.001% by weight or more, more preferably 0.01% by weight or more and is preferably 5% by weight or less, more preferably 3% by weight or less. When the content of the polymerization initiator is the above lower limit or more and the above upper limit or less, it is possible to advance the curing reaction of the resin composition more favorably, and it is possible to obtain the cured body more favorably.

(Other ingredients)

The resin composition may contain other ingredients than these three ingredients including the (meth)acrylic monomer (M), the (meth)acrylic polymer, and the polymerization initiator. Examples of the other ingredients include a plasticizer, a tackifier, an ultraviolet absorber, a filler, and a thermoplastic resin other than (meth)acrylic polymers, and so on. One kind of the other ingredient may be used alone, and two or more kinds thereof may be used in combination.

<Plasticizer>

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. It is preferred that the plasticizer be an organic ester plasticizer. It is preferred that the plasticizer be a liquid plasticizer. One kind of the plasticizer may be used alone and two or more kinds thereof may be used in combination.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

A content of the plasticizer in 100% by weight of the resin composition is preferably 0.01% by weight or more, more preferably 1% by weight or more, and is preferably 10% by weight or less, more preferably 5% by weight or less.

<Tackifier>

Examples of the tackifier include styrenic resins, a rosin resin, a terpene resin, and a petroleum resin, and the like. One kind of the tackifier may be used alone and two or more kinds thereof may be used in combination.

The rosin resin is a resin based on rosin or a rosin derivative. Examples of the rosin resin include rosin, acid modified rosin, rosin-containing diol, rosin ester, hydrogenated rosin ester and maleic acid modified rosin ester, and the like. Examples of the acid modified rosin include acrylic acid modified rosin.

A content of the tackifier in 100% by weight of the resin composition is preferably 0.01% by weight or more, more preferably 1% by weight or more, and is preferably 30% by weight or less, more preferably 20% by weight or less.

<Ultraviolet absorber>

Examples of the ultraviolet absorber include an ultraviolet absorber having a benzotriazole structure, an ultraviolet absorber having a benzophenone structure, an ultraviolet absorber having a triazine structure, and an ultraviolet absorber having a malonic ester, and the like. One kind of the ultraviolet absorber may be used alone, and two or more kinds thereof may be used in combination.

Examples of the ultraviolet absorber having a benzotriazole structure include ultraviolet absorbers having a benzotriazole structure such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), 2-[4-(2-hydroxy-3-dodecyloxy-propyl)oxy-2-hydroxyphenyl]-4,6-[bis(2,4-dimethylphenyl)-1,3,5-triazine ("Tinuvin400" available from BASF Japan Ltd.), and 2,4-bis[2-hydroxy-4-butoxyphenyl)-6-(2,4-dibutoxyphenyl)-1,3-5-triazine ("Tinuvin460" available from BASF Japan Ltd.).

Examples of the ultraviolet absorber having a benzophenone structure include octabenzone ("Chimassorb 81" available from BASF Japan Ltd.), and the like.

Examples of the ultraviolet absorber having a triazine structure include "LA-F70" available from ADEKA CORPORATION, and 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet absorber having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet absorber having a malonic acid ester structure include Hostavin B-CAP, Hostavin PR-25 and Hostavin PR-31 (any of these is available from Clariant Japan K.K.).

A content of the ultraviolet absorber in 100% by weight of the resin composition is preferably 0.0001% by weight or more, more preferably 0.001% by weight or more and is preferably 2% by weight or less, more preferably 1% by weight or less.

<Filler>

Examples of the filler include organic fillers and inorganic fillers and the like. Only one kind of the filler may be used, and two or more kinds thereof may be used in combination.

Examples of the organic fillers include acrylic thermoplastic elastomers, styrene-butadiene thermoplastic elastomers, styrene thermoplastic elastomers and rubber fillers formed of urethane and the like.

Examples of the inorganic fillers include carbonates such as talc, heavy calcium carbonate, precipitated calcium carbonate, and colloidal calcium carbonate, aluminum hydroxide, magnesium hydroxide, titanium oxide, clay, mica, wollastonite, zeolite, silica, calcium oxide, aluminum oxide, zinc oxide, magnesium oxide, carbon black, graphite, glass bead, glass fiber, carbon fiber, and metal fiber, and the like.

A content of the filler in 100% by weight of the resin composition is preferably 0.01% by weight or more, more preferably 0.1% by weight or more and is preferably 10% by weight or less, more preferably 5% by weight or less.

(Other details of resin composition)

Viscosity at 25°C and 10 rpm of the resin composition is preferably 700 cps or more, more preferably 1000 cps or more, and is preferably 30000 cps or less, more preferably 20000 cps or less, further preferably 10000 cps or less. When the viscosity is the above lower limit or more and the above upper limit or less, it is possible to further enhance the application property.

The viscosity is measured under the conditions of 25°C and 10 rpm using a plate-type viscometer (for example, "TPE-100 type viscometer" available from Toki Sangyo Co., Ltd).

A solid weight (solid content) in 100% by weight of the resin composition is preferably 5% by weight or more, and is preferably 30% by weight or less. When the solid weight is the above lower limit or more and the above upper limit or less, it is possible to further enhance the application property.

It is preferred that the resin composition be used while it is applied, and it is preferred that the resin composition be used while it is cured after application. It is preferred that the resin composition be applied in a thickness of 1 mm or more, and it is more preferred that the resin composition be applied in a thickness of 3 mm or more. It is preferred that the resin composition be applied in a thickness of 10 mm or less, it is more preferred that the resin composition be applied in a thickness of 6 mm or less, and it is further preferred that the resin composition be applied in a thickness of 4 mm or less.

(Production method of resin composition)

The method for producing a resin composition according to the present invention is a method for producing the aforementioned resin composition. The method for producing a resin composition according to the present invention is the following production method (1) or the following production method (2). The method for producing a resin composition according to the present invention can be either the following production method (1) or the following production method (2). The resin composition may be produced by a method other than the production method (1) and the production method (2).

<Production method (1)>

The production method (1) is a method for producing a resin composition, comprising a step of polymerizing a first composition containing a (meth)acrylic monomer and a polymerization initiator, and a step of suspending polymerization reaction of the first composition to obtain a resin composition containing a (meth)acrylic monomer (M) and a (meth)acrylic polymer.

In the production method (1), it is possible to make the (meth)acrylic polymer well miscible in a (meth)acrylic monomer-containing solution, and it is possible to realize excellent weight average molecular weight and molecular weight distribution of the (meth)acrylic polymer contained in the obtained resin composition.

In the production method (1), by suspending the polymerization reaction of the first composition without completely advancing the polymerization reaction, it is possible to obtain a resin composition containing a (meth)acrylic monomer (M) and a (meth)acrylic polymer.

Therefore, the (meth)acrylic monomer contained in the first composition preferably includes the first (meth)acrylic monomer, preferably includes the first (meth)acrylic monomer and the second (meth)acrylic monomer, and preferably includes the first (meth)acrylic monomer and the third (meth)acrylic monomer. The (meth)acrylic monomer contained in the first composition preferably includes the first (meth)acrylic monomer, the second (meth)acrylic monomer, and the third (meth)acrylic monomer.

The polymerization method in the step of polymerizing the first composition is not particularly limited. The method of polymerizing the first composition may be a method by thermal polymerization or may be a method by photopolymerization. As the method by photopolymerization, a method of using an active energy ray such as ultraviolet rays and the like are recited.

When the first composition is polymerized by thermal polymerization, a thermal polymerization initiator is used as the polymerization initiator. Examples of the thermal polymerization initiator include the aforementioned thermal polymerization initiators.

When the first composition is polymerized by photopolymerization, a photopolymerization initiator is used as the polymerization initiator. Examples of the photopolymerization initiator include the aforementioned photopolymerization initiators.

From the viewpoint of easily suspending the polymerization reaction of the first composition, and the viewpoint of increasing the production scale of the resin composition, the method of polymerizing the first composition is preferably a method by thermal polymerization. Therefore, the polymerization initiator to be used for obtaining the first composition is preferably a thermal polymerization initiator.

From the viewpoint of enhancing the characteristics of the obtained cured product, the method for polymerizing the first composition is preferably a method by photopolymerization using an active energy ray, and is more preferably photopolymerization using ultraviolet rays (UV). Therefore, the polymerization initiator to be used for obtaining the first composition is preferably a photopolymerization initiator.

As an apparatus capable of emitting the active energy ray, it is preferred to use a photocuring apparatus such as an ultraviolet irradiation device. Examples of the ultraviolet irradiation device include a box-type ultraviolet irradiation device and a belt-conveyer-type ultraviolet irradiation device. Examples of the ultraviolet lamp installed in the ultraviolet irradiation device include a superhigh-pressure mercury lamp, a high-pressure mercury lamp, a low-pressure mercury lamp, a chemical lamp, a metal halide lamp, an excimer lamp, and a UV-LED and the like. The ultraviolet lamp is preferably a chemical lamp or a UV-LED.

The irradiation energy of the active energy ray is preferably 600 mJ/cm$^2$ or more, more preferably 1000 mJ/cm$^2$ or more, and is preferably 10000 mJ/cm$^2$ or less, more preferably 5000 mJ/cm$^2$ or less. When the irradiation energy of the active energy ray is the above lower limit or more, it is possible to reduce the amount of unreacted (meth)acrylic monomers. When the irradiation energy of the active energy ray is the above upper limit or less, the storage stability of the obtained (meth)acrylic polymer is enhanced.

The irradiation intensity of the ultraviolet irradiation is preferably 0.1 mW/cm$^2$ or more, more preferably 0.5 mW/cm$^2$ or more, further preferably 1 mW/cm$^2$ or more, especially preferably 2 mW/cm$^2$ or more. When the irradiation energy of the ultraviolet irradiation is the above lower limit or more, it is possible to reduce the amount of unreacted (meth)acrylic monomers.

As a method for suspending the polymerization reaction of the first composition, a method of suspending heating and a method of suspending light irradiation, and the like are recited.

The step of suspending polymerization reaction of the first composition to obtain a resin composition containing a (meth)acrylic monomer (M) and a (meth)acrylic polymer may include the following step (1) and step (2).

Step (1): step of suspending polymerization reaction of the first composition to obtain a second composition containing a (meth)acrylic monomer and a (meth)acrylic polymer.

Step (2) : step of mixing the second composition and a (meth)acrylic monomer to obtain a resin composition containing a (meth)acrylic monomer (M) and a (meth)acrylic polymer.

In the step (1), it is preferred to suspend the polymerization reaction of the first composition so that a content of the (meth) acrylic polymer in 100% by weight of the obtained second composition is 40% by weight or less (preferably 35% by weight or less, more preferably 30% by weight or less, further preferably 20% by weight or less).

The step (2) may be a step of mixing the second composition, a (meth)acrylic monomer and a polymerization initiator to obtain a resin composition containing a (meth)acrylic monomer (M), a (meth)acrylic polymer, and a polymerization initiator. In this case, the (meth)acrylic monomer and the polymerization initiator may be added to the second composition simultaneously, the polymerization initiator may be added after addition of the (meth)acrylic monomer, and the (meth)acrylic monomer may be added after addition of the polymerization initiator. The kind of the (meth)acrylic monomer to be mixed with the second composition may be the same or different from the kind of the (meth) acrylic monomer contained in the first composition. The kind of the polymerization initiator to be mixed with the second composition may be the same or different from the kind of the polymerization initiator contained in the first composition. It is preferred that the polymerization initiator to be added be a photopolymerization initiator.

<Production method (2)>

The production method (2) includes a step of polymerizing a first composition containing a (meth)acrylic monomer and a polymerization initiator to obtain a second composition containing a (meth)acrylic polymer, and a step of mixing the second composition and a (meth)acrylic monomer to obtain resin composition containing a (meth)acrylic monomer (M) and a (meth)acrylic polymer. The production method (2) is a method for producing a resin composition including the above steps.

In the production method (2), since excessive polymerization reaction does not occur in bulk, it is possible to produce the resin composition safely and stably. Also, since the composition of (meth)acrylic monomer and (meth)acrylic polymer can be easily changed, it is possible to freely design the physical properties such as elastic modulus of the cured body.

The (meth)acrylic monomer contained in the first composition preferably includes the first (meth)acrylic monomer, preferably includes the first (meth)acrylic monomer and the second (meth)acrylic monomer, and preferably includes the first (meth)acrylic monomer and the third (meth)acrylic monomer. The (meth)acrylic monomer contained in the first composition preferably includes the first (meth)acrylic monomer, the second (meth)acrylic monomer, and the third (meth)acrylic monomer.

The polymerization method in the step of polymerizing the first composition is not particularly limited. The method of polymerizing the first composition may be a method by thermal polymerization or may be a method by photopolymerization. As the method by photopolymerization, a method of using an active energy ray such as ultraviolet rays and the like are recited.

When the first composition is polymerized by thermal polymerization, a thermal polymerization initiator is used as the polymerization initiator. Examples of the thermal polymerization initiator include the aforementioned thermal polymerization initiators.

When the first composition is polymerized by photopolymerization, a photopolymerization initiator is used as the polymerization initiator. Examples of the photopolymerization initiator include the aforementioned photopolymerization initiators.

From the viewpoint of increasing the production scale of the resin composition, the method of polymerizing the first composition is preferably a method by thermal polymerization. Therefore, the polymerization initiator to be used for obtaining the first composition is preferably a thermal polymerization initiator.

From the viewpoint of enhancing the characteristics of the obtained cured product, the method for polymerizing the first composition is preferably a method by photopolymerization using an active energy ray, and is more preferably photopolymerization using ultraviolet rays (UV). Therefore, the polymerization initiator to be used for obtaining the first composition is preferably a photopolymerization initiator.

In the method of polymerizing the first composition in the production method (2), the apparatus, and preferred conditions such as irradiation energy of active energy ray and the like are the same as the conditions and the like described in the above production method (1).

In the step of obtaining the second composition, it is preferred to suspend the polymerization reaction of the first composition so that a content of the (meth)acrylic polymer in 100% by weight of the obtained second composition is 80% by weight or more (preferably 90% by weight or more, more preferably 95% by weight or more, further preferably 99% by weight or more).

The step of mixing the second composition and a (meth)acrylic monomer to obtain a resin composition containing a (meth)acrylic monomer (M) and a (meth)acrylic polymer may be a step of mixing the second composition, a (meth)acrylic monomer, and a polymerization initiator to obtain a resin composition containing a (meth)acrylic monomer and a (meth)acrylic polymer. In this case, the (meth)acrylic monomer and the polymerization initiator may be added to the second composition simultaneously, the polymerization initiator may be added after addition of the (meth)acrylic monomer, and the (meth)acrylic monomer may be added after addition of the polymerization initiator. The kind of the (meth)acrylic monomer to be mixed with the second composition may be the same or different from the kind of the (meth)acrylic monomer contained in the first composition. The kind of the polymerization initiator to be mixed with the second composition may be the same or different from the kind of the polymerization initiator contained in the first composition. It is preferred that the polymerization initiator to be added be a photopolymerization initiator.

In the production method (2), it is preferred to add a (meth)acrylic monomer and a polymerization initiator to the second composition to obtain a resin composition containing a (meth)acrylic monomer (M), a (meth)acrylic polymer, and a polymerization initiator.

In the production method (2), the kind of the (meth)acrylic monomer contained in the first composition, and the kind of the (meth)acrylic monomer contained in the second composition may be the same or different from each other.

(Cured body)

A cured body according to the present invention is a cured body obtained by curing the aforementioned resin composition.

The cured body can be obtained by curing the resin composition by a well-known method. The cured body may be a cured body obtained by phot-curing the resin composition, or may be a cured body obtained by heat curing the resin composition.

From the viewpoint of increasing the weight average molecular weight of the obtained (meth)acrylic polymer, and narrowing the molecular weight distribution, the cured body is preferably a cured body obtained by photo-curing the resin composition, and more preferably a cured body obtained by photo-curing with ultraviolet rays.

When a cured body is obtained by photo-curing with ultraviolet rays, illuminance of the ultraviolet rays is preferably 2 mW/cm$^2$ or more, more preferably 15 mW/cm$^2$ or more, further preferably 30 mW/cm$^2$ or more, and is preferably 100mW/cm$^2$ or less. The illuminance of ultraviolet rays may be 30 mW/cm$^2$ or less, and may be 15 mW/cm$^2$ or less. When the illuminance of ultraviolet rays is the above lower limit or more and the above upper limit or less, it is possible to increase the weight average molecular weight of the obtained (meth)acrylic polymer.

When a cured body is obtained by photo-curing with ultraviolet rays, the dose of the ultraviolet rays is preferably 500 mJ/cm$^2$ or more, and is preferably 3000 mJ/cm$^2$ or less. After irradiation with a dose of 500 mJ/cm$^2$ or more and 3000 mJ/cm$^2$ or less, it is also preferred to further conduct irradiation with an illuminance of 30 mW/cm$^2$ or more and 100 mW/cm$^2$ or less and a dose of 1000 mJ/cm$^2$ or more and 2000 mJ/cm$^2$ or less. In this case, it is possible to reduce the amount of unreacted (meth)acrylic monomers.

From the viewpoint of especially reducing the amount of unreacted (meth)acrylic monomers contained in the cured body, it is preferred that the cured body be a cured body obtained by photo-curing with ultraviolet rays followed by heat deairing. Examples of a method of heat deairing include firing at 170°C for 1 hour to 2 hours, and a method of deairing with an extruder equipped with a vacuum vent.

From the viewpoint of stabilizing the melting viscosity of the cured body, and further enhancing the grindability of the cured body, a gel fraction of the cured body is preferably 30% by weight or less, more preferably 20% by weight or less, further preferably 10% by weight or less, especially preferably 5% by weight or less. A gel fraction of the cured body may be 0% by weight or more, and may be 0.1% by weight or more.

The gel fraction can be determined in the following manner.

A cured body (0.15 g) is dipped in 30 g of tetrahydrofuran, and shaken and dipped at 23°C for 36 hours. Then, the cured body is taken out through the filter of 200 meshes, and dried by heating at 110°C for 1 hour. Then, the weight of the cured body is measured. The gel fraction can be calculated according to the following formula (X). In the case where the monomer and the like constituting the (meth)acrylic polymer contained in the cured body includes a compound having an amide group, gel may be generated when the cured body and tetrahydrofuran are mixed. In this case, gel fraction may be determined by using acetone, dimethylformamide or a mixed solvent thereof in place of tetrahydrofuran.

$$\texttt{Gel fraction (\% by weight) = W2/W1 × 100 Formula (X)}$$

W1: Weight of cured body before dipping cured body in tetrahydrofuran at 23°C
W2: Weight of cured body after drying cured body having dipped in tetrahydrofuran at 23°C, and taken out

The weight average molecular weight of the (meth)acrylic polymer contained in the cured body is preferably 500000 or more, more preferably 650000 or more, and is preferably 2000000 or less, more preferably 1700000 or less. When the weight average molecular weight of the (meth)acrylic polymer is the above lower limit or more and the above upper limit or less, it is possible to further enhance the heat resistance, the grindability and the oil resistance.

The weight average molecular weight means a weight average molecular weight, calculated on the standard sample equivalent basis, by gel permeation chromatography (GPC) measurement. Examples of the standard sample include polystyrene, polymethyl methacrylate, and polyethylene glycol, and the like. For example, in order to determine a weight average molecular weight on the polystyrene equivalent basis, GPC measurement for a polystyrene standard sample having a known molecular weight is conducted. Specifically, measurement can be conducted in the same manner as the above-described method for measuring a weight average molecular weight of a (meth)acrylic polymer contained in the resin composition. The solvent for dissolving the cured body can be appropriately changed.

The shape of the cured body is not particularly limited. The cured body may be a sheet-like shape, or may be a particulate shape. A particulate cured body can be obtained, for example, by grinding the obtained cured body. The cured body may be a cured body obtained by forming a particulate cured body into a sheet-like shape. The sheet-like cured body may be a sheet-like cured body obtained by curing the resin composition layer, or may be a sheet-like cured body obtained by forming a particulate cured body into a sheet shape.

The cured body is preferably sheet-like or particulate. The cured body is preferably sheet-like, and also preferably particulate.

Thickness of a sheet-like cured body may be 0.01 mm or more, may be 0.05 mm or more, may be 0.5 mm or more, may be 1 mm or more, may be 2 mm or more, and may be 3 mm or more. Thickness of a sheet-like cured body may be 10 mm or less, may be 6 mm or less, may be 4 mm or less, and may be 1 mm or less.

Thickness of a sheet-like cured body obtained by curing a resin composition layer is preferably 0.5 mm or more, more preferably 2 mm or more, and is preferably 10 mm or less, more preferably 6 mm or less.

Thickness of a sheet-like cured body obtained by forming a particulate cured body into a sheet-like shape is preferably 0.01 mm or more, more preferably 0.05 mm or more, and is preferably 4 mm or less, more preferably 1 mm or less.

On a surface of a sheet-like cured body, other layer (for example, resin layer) may be arranged. The sheet-like cured body may constitute a laminated sheet. In the laminated sheet, the sheet-like cured body may be a surface layer, and may be an intermediate layer.

Hereinafter, the present invention will be described in more detail with reference to examples and comparative examples. The present invention is not limited only to these examples.

The following materials were prepared.

((Meth)acrylic monomer)

IBOA: Isobornyl acrylate (available from NIPPON SHOKUBAI CO., LTD.)
DMAA: Dimethyl acrylamide (available from KJ Chemicals Corporation)
HPMA: 2-hydroxypropyl methacrylate (available from NIPPON SHOKUBAI CO., LTD.)
2EHA: 2-ethylhexyl acrylate (available from NIPPON SHOKUBAI CO., LTD.)
BA: Butyl acrylate (available from NIPPON SHOKUBAI CO., LTD.)
CTFA: Trimethylolpropane formal acrylate (cyclic (meth)acrylic monomer containing an oxygen atom in a heterocycle) ("VISCOAT #200" available from OSAKA ORGANIC CHEMICAL INDUSTRY LTD.)
MEDOL: (2-methyl-2-ethyl-1,3-dioxolane-4-yl)methyl acrylate ("MEDOL-10" available from OSAKA ORGANIC CHEMICAL INDUSTRY LTD.)

(Polymerization initiator)

Photopolymerization initiator ("Omnirad 184" available from IGM Resins B.V.)

(1) Glass transition temperature of homopolymer of (meth)acrylic monomer

One hundred parts by weight of (meth)acrylic monomer (IBOA, DMAA, 2EHA, CTFA, HPMA, BA, or MEDOL), and 0.2 parts by weight of a photopolymerization initiator were stirred with a planetary stirrer ("Awatori Rentaro" available from THINKY) to obtain a photopolymerizable composition. The obtained photo-polymerizable composition was sandwiched between two PET sheets having subjected to a mold release treatment on one side ("1-E" available from Nippa Corporation, having a thickness of 50 $\mu$m) to form a photo-polymerizable composition layer having a thickness of 100 um. A spacer having a thickness of 100um was arranged on peripheral portion of the two PET sheets. The photopolymerizable composition layer was irradiated with ultraviolet rays with an irradiation energy of 3000 mJ/cm$^2$ at an illuminance of 5 mW/cm$^2$, using a chemical lamp ("Linear starter type, model 20, FL20SBL" available from TOSHIBA CORPORATION) to cure the photopolymerizable composition. Then the two PET sheets having subjected to a mold release treatment on one side were peeled off. In this manner, a homopolymer (cured product) of a (meth)acrylic monomer was obtained.

Viscoelasticity of the obtained homopolymer was measured using a viscoelasticity measuring device ("ARES-G2" available from TA Instruments). A parallel plate with a diameter of 8 mm was used as a jig, and the measurement was performed in a shearing mode under the condition in which the temperature is increased from -100°C to 200°C at a temperature increasing rate of 3°C/minute and under the condition of a frequency of 1 Hz and a strain of 1%. In the measurement results obtained, the peak temperature of the loss tangent was defined as the glass transition temperature Tg (°C).

The results are shown in Table 1 below.

[Table 1]

| | | | Glass transition temperature of homopolymer (°C) |
|---|---|---|---|
| (Meth) acrylic monomer | IBOA | Isobornyl acrylate | 74 |
| | DMAA | Dimethyl acrylamide | 90.4 |
| | HPMA | 2-hydroxypropyl methacrylate | 100.1 |
| | 2EHA | 2-ethylhexyl acrylate | -48.2 |
| | BA | Butyl acrylate | -41.8 |
| | CTFA | Trimethylolpropane formal acrylate | 44.3 |
| | MEDOL | (2-methyl-2-ethyl-1,3-dioxolane-4-yl)methyl acrylate | 3.8 |

As can be understood from the results of Table 1, IBOA, DMAA and HPMA are the first (meth)acrylic monomers, 2EHA and BA are the second (meth)acrylic monomers, and CTFA and MEDOL are the third (meth)acrylic monomers.

(2) Glass transition temperature of polymer polymerized from (meth)acrylic monomer (M)

(Meth)acrylic monomers were mixed in blending compositions shown in the following Tables 2 to 4 to prepare (meth) acrylic monomer mixed compositions (A-1) to (A-7) and (X-1) to (X-3). Glass transition temperature of a polymer polymerized from the (meth)acrylic monomer (M) was measured in the following manner. Measurement was conducted in the same manner as the above "(1) Glass transition temperature of homopolymer of (meth)acrylic monomer" except that 100 parts by weight of the obtained (meth)acrylic monomer mixed composition (A-1) to (A-7) or (X-1) to (X-3) was used in place of 100 parts by weight of (meth) acrylic monomer.
Compositions and results are shown in the following Tables 2 to 4.

[Table 2]

| | | Kind | | A-1 | A-2 | A-3 | A-4 |
|---|---|---|---|---|---|---|---|
| (Meth) acry lic monomer (M) | First (meth) acrylic monomer | IBOA | parts by weight | 64 | 60 | 65 | 30 |
| | | DMAA | parts by weight | 20 | 17 | 10 | 23 |
| | | HPMA | parts by weight | - | - | - | - |
| | Second (meth) acrylic monomer | 2EHA | parts by weight | 6 | 10 | 25 | 42 |
| | | BA | parts by weight | - | - | - | - |
| | Third (meth) acrylic monomer | CTFA | parts by weight | 10 | 13 | - | 5 |
| | | MEDOL | parts by weight | - | - | - | - |

(continued)

| Kind | | A-1 | A-2 | A-3 | A-4 |
|---|---|---|---|---|---|
| Content of first (meth)acrylic monomer in 100% by weight of (meth) acrylic monomer (M) | % by weight | 84 | 77 | 75 | 53 |
| Content of second (meth)acrylic monomer in 100% by weight of (meth) acrylic monomer (M) | % by weight | 6 | 10 | 25 | 42 |
| Content of third (meth)acrylic monomer in 100% by weight of (meth) acrylic monomer (M) | % by weight | 10 | 13 | - | 5 |
| Glass transition temperature Tg of polymer polymerized from (meth) acrylic monomer (M) | °C | 63.52 | 42.57 | 36.63 | 15.05 |

[Table 3]

| Kind | | | | A-5 | A-6 | A-7 |
|---|---|---|---|---|---|---|
| (Meth) acrylic monomer (M) | First (meth) acrylic monomer | IBOA | parts by weight | 60 | 60 | 60 |
| | | DMAA | parts by weight | - | 24 | 24 |
| | | HPMA | parts by weight | 24 | - | - |
| | Second (meth) acrylic monomer | 2EHA | parts by weight | 6 | - | 6 |
| | | BA | parts by weight | - | 6 | - |
| | Third (meth) acrylic monomer | CTFA | parts by weight | 10 | 10 | - |
| | | MEDOL | parts by weight | - | - | 10 |
| Content of first (meth)acrylic monomer in 100% by weight of (meth) acrylic monomer (M) | % by weight | | | 84 | 84 | 84 |
| Content of second (meth)acrylic monomer in 100% by weight of (meth) acrylic monomer (M) | % by weight | | | 6 | 6 | 6 |
| Content of third (meth)acrylic monomer in 100% by weight of (meth) acrylic monomer (M) | % by weight | | | 10 | 10 | 10 |
| Glass transition temperature Tg of polymer polymerized from (meth) acrylic monomer (M) | °C | | | 79.92 | 69.94 | 63.76 |

[Table 4]

| Kind | | | | X-1 | X-2 | X-3 |
|---|---|---|---|---|---|---|
| (Meth) acrylic monomer (M) | First (meth) acrylic monomer | IBOA | parts by weight | 30 | - | 60 |
| | | DMAA | parts by weight | 10 | - | 30 |
| | | HPMA | parts by weight | - | - | - |

(continued)

| Kind | | | | X-1 | X-2 | X-3 |
|---|---|---|---|---|---|---|
| Second (meth) acrylic monomer | 2EHA | parts by weight | | 60 | 80 | 5 |
| | BA | parts by weight | | - | - | |
| Third (meth) acrylic monomer | CTFA | parts by weight | | - | 20 | 5 |
| | MEDOL | parts by weight | | - | - | |
| Content of first (meth)acrylic monomer in 100% by weight of (meth) acrylic monomer (M) | | % by weight | | 40 | 0 | 90 |
| Content of second (meth)acrylic monomer in 100% by weight of (meth)acrylic monomer (M) | | % by weight | | 60 | 80 | 5 |
| Content of third (meth)acrylic monomer in 100% by weight of (meth) acrylic monomer (M) | | % by weight | | - | 20 | 5 |
| Glass transition temperature Tg of polymer polymerized from (meth) acrylic monomer (M) | | °C | | -5.25 | -34.28 | 74.90 |

(Example 1)

Preparation of resin composition:

A resin composition was prepared by the above production method (1). Specifically, a resin composition was prepared in the following manner.

One hundred and twenty grams of (meth)acrylic monomer mixed composition (A-1) was put into a 2L-separable flask. In the 2L-separable flask, 2,2'-azobis(2-methylbutyronitrile)("V-59" available from FUJIFILM Wako Pure Chemical Corporation) was added as a thermal polymerization initiator at 0.6 ppm. In this manner, the first composition containing a (meth)acrylic monomer and a thermal polymerization initiator was obtained. Next, the interior of the separable flask and the first composition were bubbled with nitrogen for 30 minutes in a flow rate of 0.2 L/min to conduct nitrogen flow in the flask. After 30 minutes, the flow rate of nitrogen flow was reduced to 0.5 L/min, and the solution was heated to 60°C in a water bath. At the time when the polymerization reaction started, the separable flask was taken out of the water bath to lower the temperature, and thus the polymerization reaction was suspended. In this manner, the second composition containing a (meth)acrylic monomer and a (meth)acrylic polymer was obtained. Then, tetrahydrofuran (THF) and the second composition were weighed on an aluminum dish so that the content of the second composition, relative to 100 parts by weight of the THF was 1 part by weight, and these were dried in an oven at 140°C to measure a weight solid concentration of the (meth)acrylic polymer in the second composition. Then, (meth)acrylic monomer mixed composition (A-1) was added to the second composition to obtain a resin composition containing 10 parts by weight of the (meth)acrylic polymer (B-1), relative to 100 parts by weight of the (meth)acrylic monomer. The resin composition had a viscosity at 25°C and 10 rpm of 1200 cps. Then, 0.2 parts by weight of a photopolymerization initiator ("Omnirad 184" available from IGM Resins B.V.) was added to the obtained resin composition, and stirred at normal temperature, to obtain a resin composition (resin composition having a mixing composition shown in Table 7) containing a (meth)acrylic monomer (M), a (meth)acrylic polymer and a photopolymerization initiator.

Preparation of cured body:

The obtained resin composition was applied in a size of 500 mm long × 300 mm wide × 3 mm thick on a PET sheet, on mirror-finished soda glass, such that the resin composition was sandwiched between two PET sheets having subjected to a mold release treatment on the inner side, to form a resin composition layer. The resin composition layer was irradiated with ultraviolet rays at a dose of 2000 mJ/cm$^2$ with a chemical lamp ("Linear starter type, model 20, FL20SBL" available from TOSHIBA CORPORATION) to cure the resin composition. Then the two PET sheets having subjected to a mold release treatment on one side were peeled off. In this manner, a cured body obtained by curing the resin composition was obtained.

(Example 2)

Preparation of resin composition:

A resin composition was prepared by the above production method (1). Specifically, a resin composition was prepared in the following manner.

One hundred and twenty grams of (meth)acrylic monomer mixed composition (A-1) was put into a 2L-separable flask. In the 2L-separable flask, 0.5 parts by weight of a photopolymerization initiator ("Omnirad 184" available from IGM Resins B.V.) was added. In this manner, the first composition containing a (meth)acrylic monomer and a photopolymerization initiator was obtained. Next, the interior of the separable flask and the first composition were bubbled with nitrogen for 30 minutes in a flow rate of 0.2 L/min to conduct nitrogen flow in the flask. After 30 minutes, the flow rate of nitrogen flow was reduced to 0.5 L/min, and light irradiation at an illuminance of 1 mW/cm$^2$ was conducted using a compact UV irradiator ("TOSHIBA fluorescent illuminator FT-06001-GL16", available from Toshiba Lighting & Technology corporation) while the solution was stirred. At the time when the polymerization reaction started, the power of the illumination was turned off, and the temperature of the separable flask was lowered in water to suspend the polymerization reaction. In this manner, the second composition containing a (meth)acrylic monomer, a (meth)acrylic polymer and a photopolymerization initiator was obtained. Then, tetrahydrofuran (THF) and the second composition were weighed on an aluminum dish so that the content of the second composition, relative to 100 parts by weight of the THF was 1 part by weight, and these were dried in an oven at 140°C to measure a weight solid concentration of the (meth)acrylic polymer in the second composition. Then, (meth)acrylic monomer mixed composition (A-1) was added to the second composition. In this manner, a resin composition containing a (meth)acrylic monomer (M), a (meth)acrylic polymer (B-2), and a photopolymerization initiator (resin composition having a mixing composition shown in Table 7) was obtained. The obtained resin composition had a viscosity at 25°C and 10 rpm of 1500 cps.

Preparation of cured body:

A cured body obtained by curing the resin composition was obtained in the same manner as Example 1.

(Example 3)

Preparation of resin composition:

A resin composition was prepared by the above production method (2). Specifically, a resin composition was prepared in the following manner.

To (meth)acrylic monomer mixed composition (A-1), 0.2 parts by weight of a photopolymerization initiator ("Omnirad 184" available from IGM Resins B.V.) was added and dissolved under stirring at normal temperature to obtain a first composition. The obtained first composition was applied in a size of 500 mm long × 200 mm wide × 100 um thick on a PET sheet, on mirror-finished soda glass, such that the first composition was sandwiched between two PET sheets having subjected to a mold release treatment on the inner side, to form a first composition layer. The first composition layer was irradiated with ultraviolet rays at a dose of 2000 mJ/cm$^2$ with a chemical lamp ("Linear starter type, model 20, FL20SBL" available from TOSHIBA CORPORATION) to cure the first composition to obtain meth(acrylic) polymer (B-3) (second composition containing a (meth)acrylic polymer). Then, (meth)acrylic monomer mixed composition (A-1) was put into a 2L-separable flask. Then, in a 2L-separable flask, the obtained (meth)acrylic polymer (B-3) was added so that (meth)acrylic polymer(B-3) was 10 parts by weight, relative to 100 parts by weight of (meth)acrylic monomer mixed composition (A-1), and then heated to 80°C to dissolve (meth)acrylic polymer (B-3). Then, 0.2 parts by weight of a photopolymerization initiator ("Omnirad 184" available from IGM Resins B.V.) was added, and stirred at normal temperature, to obtain a resin composition (resin composition having a mixing composition shown in Table 7) containing a (meth)acrylic monomer (M), a (meth)acrylic polymer and a photopolymerization initiator.

Preparation of cured body:

A cured body obtained by curing the resin composition was obtained in the same manner as Example 1.

(Examples 4 to 11)

A resin composition was obtained in the same manner as Example 1 or Example 3 except that the production method and the mixing composition of the resin composition were changed to those described in Tables 7 to 9. Also, a cured body obtained by curing the resin composition was obtained in the same manner as Example 1.

(Comparative Examples 1, 7 to 9)

A resin composition was obtained in the same manner as Example 3 except that the production method and the mixing composition of the resin composition were changed to those described in Tables 10 to 12. Also, a cured body obtained by curing the resin composition was obtained in the same manner as Example 1.

(Comparative Example 2)

A resin composition was obtained in the same manner as Example 1 except that the production method and the mixing composition of the resin composition were changed to those described in Table 10. A cured body obtained by curing a resin composition was obtained in the same manner as Example 1 except that the resin composition was applied into a thickness of 1 mm between two PET sheets having subjected to a mold release treatment on the inner side.

(Comparative Example 3)

A resin composition was prepared in the same manner as Example 3 except that a mixing amount of the photopolymerization initiator in obtaining the first composition was changed to 0.1 parts by weight, a dose of ultraviolet rays for curing the first composition layer was changed to 4000 mJ/cm$^2$, and the mixing composition was changed to that described in Table 10. However, the (meth)acrylic polymer was insoluble, and it was impossible to favorably obtain the resin composition. Therefore, in Comparative Example 3, the later-described evaluation was not conducted.

(Comparative Example 4)

To (meth)acrylic monomer mixed composition (X-1), 0.2 parts by weight of a photopolymerization initiator ("Omnirad 184" available from IGM Resins B.V.) was added, then 1 part by weight of dodecane thiol (available from FUJIFILM Wako Pure Chemical Corporation) was added as a chain transfer agent, and dissolved under stirring at normal temperature to obtain a first composition. Using the obtained first composition, a resin composition was obtained in the same manner as Example 3 except that the production method and the mixing composition of the resin composition were changed to those described in Table 10. Also, a cured body obtained by curing the resin composition was obtained in the same manner as Example 3.

(Comparative Example 5)

A resin composition was obtained in the same manner as Comparative Example 4 except that the production method and the mixing composition of the resin composition were changed to those described in Table 11. A cured body obtained by curing a resin composition was obtained in the same manner as Example 1 except that the resin composition was applied into a thickness of 1 mm between two PET sheets having subjected to a mold release treatment on the inner side.

(Comparative Examples 6, 10)

A resin composition was obtained in the same manner as Example 1 except that the production method and the mixing composition of the resin composition were changed to those described in Tables 11, 12. Also, a cured body obtained by curing the resin composition was obtained in the same manner as Example 1.

(Evaluation)

(1) Weight average molecular weight of (meth)acrylic polymer contained in resin composition

Tetrahydrofuran (THF) and a resin composition were added to a container so that the content of the obtained resin composition was 10 parts by weight, relative to 100 parts by weight of THF, and the resin composition was dissolved. Then, on a PET sheet having subjected to a mold release treatment, the resultant resin composition solution was applied so that the thickness was 200 um or less, and dried in an oven at 140°C to recover the (meth)acrylic polymer contained in the resin composition. The recovered (meth)acrylic polymer was dissolved in a mixed solvent of dimethylformamide (DMF) and tetrahydrofuran (THF) (DMF : THF = 80% by weight : 20% by weight) to obtain a solution of 0.2% by weight. The obtained solution was filtered through a filter with a pore size of 0.2 um. To the filtrate, 10 mM lithium bromide was dissolved as an eluent. Using a mixed solvent of dimethylformamide (DMF) and tetrahydrofuran (THF), weight average molecular weight of the (meth)acrylic polymer contained in the obtained resin composition was measured by the aforementioned method. As a standard sample, a polyethylene standard sample of the aforementioned nine samples ("Shodex Standard SM-105" available from SHOWA DENKO K.K.) was used.

Configurations of (meth)acrylic polymers contained in resin compositions and results are shown in the following Tables 5, 6.

[Table 5]

| | Kind | | | B-1 | B-2 | B-3 |
|---|---|---|---|---|---|---|
| Configuratio n of (meth) acryli c polymer contained in resin composition | First (meth) acr ylic monomer | IBO A | parts by weight | 64 | 64 | 64 |
| | | DMA A | parts by weight | 20 | 20 | 20 |
| | Second (meth)acr ylic monomer | 2EH A | parts by weight | 6 | 6 | 6 |
| | Third (meth) acr ylic monomer | CTF A | parts by weight | 10 | 10 | 10 |
| | Polymerizatio n method | | | Thermal polymeriza tion | UV polymeriza tion | UV polymeriza tion |
| | Weight average molecular weight | | x 10$^4$ | 78 | 85 | 94 |

| | Kind | | | B-4 | B-5 | B-6 |
|---|---|---|---|---|---|---|
| Configuratio n of (meth) acryli c polymer contained in resin composition | First (meth) acr ylic monomer | IBO A | parts by weight | 60 | 65 | 30 |
| | | DMA A | parts by weight | 17 | 10 | 10 |
| | Second (meth)acr ylic monomer | 2EH A | parts by weight | 10 | 25 | 60 |
| | Third (meth) acr ylic monomer | CTF A | parts by weight | 13 | - | - |
| | Polymerizatio n method | | | Thermal polymeriza tion | Thermal polymeriza tion | Thermal polymeriza tion |
| | Weight average molecular weight | | x 10$^4$ | 160 | 100 | 92 |

[Table 6]

| | Kind | | | Y-1 | Y-2 |
|---|---|---|---|---|---|
| Configurati on of (meth)acryl ic polymer contained in resin composition | First (meth)acr ylic monomer | IBOA | parts by weight | 64 | 30 |
| | | DMAA | parts by weight | 20 | 10 |
| | Second (meth)acr ylic monomer | 2EHA | parts by weight | 6 | 60 |
| | Third (meth)acr ylic monomer | CTFA | parts by weight | 10 | - |
| | Polymerization method | | | UV polymeriz ation | UV polymeriza tion |
| | Weight average molecular weight | | x $10^4$ | 220 | 2.5 |

(2) Weight average molecular weight of (meth)acrylic polymer contained in cured body

The obtained cured body was dissolved in a mixed solvent of dimethylformamide (DMF) and tetrahydrofuran (THF) (DMF : THF = 80% by weight : 20% by weight) to obtain a solution of 0.2% by weight. The obtained solution was filtered through a filter with a pore size of 0.2 um. To the filtrate, 10 mM lithium bromide was dissolved as an eluent. Using a mixed solvent of dimethylformamide (DMF) and tetrahydrofuran (THF), weight average molecular weight of the (meth)acrylic polymer contained in the obtained cured body was measured by the aforementioned method. As a standard sample, a polyethylene standard sample of the aforementioned nine samples ("Shodex Standard SM-105" available from SHOWA DENKO K.K.) was used.

(3) Gel fraction of cured body

Gel fraction of the obtained cured body was measured by the aforementioned method. As a solvent, a mixed solvent of dimethylformamide (DMF) and tetrahydrofuran (THF) (DMF : THF = 50% by weight : 50% by weight) was used.

(4) Melting viscosity of cured body

Melting viscosity of the obtained cured body was measured using "Capilograph 1B" available from Toyo Seiki Seisaku-sho, Ltd. In a furnace set at 200°C in which a die having an injection diameter of 1 mm and a tube length of 30 mm is inserted into an injecting part, 40 cc of a cured body was charged. The piston speed was adjusted so that a predetermined shear rate was achieved, and the cured body was extruded from inside the furnace. Melting viscosity (A) at which the load of each speed at the time of extrusion was constant was measured. The obtained melting viscosity (A) was extrapolated to a formula of a shearing stress curve: $\eta = \eta_0 \gamma^{n-1}$ ($\eta_0$: viscosity at the time of shear rate of 1, n: power law index), and viscosity at a shear rate of 1 was defined as melting viscosity (B).

[Criteria for judgment in melting viscosity of cured body]

oo: Melting viscosity (B) is 7000 Pa-s or less.
○: Melting viscosity (B) is more than 7000 Pa-s and 15000 Pa·s or less
Δ: Melting viscosity (B) is more than 15000 Pa·s and 40000 Pa·s or less
✕: Melting viscosity (B) is more than 40000 Pa·s

(5) Application property of resin composition

The obtained resin composition was applied in a size of 500 mm long $\times$ 300 mm wide $\times$ 3 mm thick on a PET sheet, on mirror-finished soda glass, such that the resin composition was sandwiched between two PET sheets having subjected to a mold release treatment on the inner side. At a position of 200 mm from the end of the resin composition layer (applied layer), a spacer having a thickness of 3 mm is provided. Thickness of the resin composition layer at this time was observed.

[Criteria for judgment in application property of resin composition]

    o: A resin composition can be applied in a thickness of 3 mm.
    $\times$: A resin composition cannot be applied in a thickness of 3 mm.

(6) Rate of change in thickness before and after curing

The following evaluation was conducted for the resin composition for which judgement in the above "(5) Application property of resin composition" was o. The resin composition layer (applied layer) obtained in the above "(5) Application property of resin composition" was irradiated with ultraviolet rays at a dose of 2000 mJ/cm$^2$ with a chemical lamp ("Linear starter type, model 20, FL20SBL" available from TOSHIBA CORPORATION) to cure the resin composition. Thickness of the obtained cured body (cured product layer) was measured, and a rate of change in thickness of the cured product layer to the thickness of the resin composition layer before curing was calculated. The evaluation was not conducted in Comparative Examples 2, 5, 9, 10 in which a resin composition could not be applied in a thickness of 3 mm.

[Criteria for judgement in rate of change in thickness before and after curing]

    oo: Rate of change in thickness is 5% or less.
    ∘: Rate of change in thickness is more than 5% and less than 15%.
    Δ: Rate of change in thickness is 15% or more.

(7) Grindability of cured body

The obtained cured body (60 g) was ground with a compact powerful crusher ("Force Mill" available from OSAKA CHEMICAL Co., Ltd.). The ground cured body was put into a cylinder with a diameter of 50 mm and a height of 100 mm, and left to stand for a day in an oven at 40°C while a weight of 1 kg was placed from above. The ground cured body after standing was examined for occurrence of blocking.

[Criteria for judgement in grindability of cured body]

    oo: The cured body is grindable, and blocking does not occur in the ground cured body.
    ∘: The cured body is grindable, and blocking occurs in the ground cured body but can be disintegrated.
    Δ: The cured body is grindable, and blocking occurs in the ground cured body, and cannot be disintegrated.
    $\times$: The cured body is ungrindable.

(8) Oil resistance of cured body

On the surface of the obtained cured body, a solid line was drawn with an oil-based pen ("Mckee" available from ZEBRA), and the state of the line was observed. Figs. 1(a) and (b) are examples of pictures after evaluation of the oil resistance of the cured body. Fig. 1(a) is an example of a solid line state that is judged as o. Fig. 1(b) is an example of a solid line state that is judged as $\times$, specifically, an example which becomes a pointillism painting.

[Criteria for judgment in oil resistance of cured body]

o: Good solid line state is kept even after one hour or later from drawing of solid line.
△: Good solid line state is kept directly after drawing of solid line, but solid line becomes a pointillism painting or bleeding occurs in one hour after drawing of solid line.
×: Solid line becomes a pointillism painting or bleeding occurs directly after drawing of solid line.

Configurations of resin compositions and results are shown in the following Tables 7 to 12.

[Table 7]

| | | | | Example 1 | Example 2 | Example 3 | Example 4 |
|---|---|---|---|---|---|---|---|
| Resin composition | (Meth)acrylic monomer (M) | A-1 | parts by weight | 100 | 100 | 100 | 100 |
| | | A-2 | parts by weight | | | | |
| | | A-3 | parts by weight | | | | |
| | | A-4 | parts by weight | | | | |
| | | X-1 | parts by weight | | | | |
| | (Meth)acrylic polymer | B-1 | parts by weight | 10 | | | 25 |
| | | B-2 | parts by weight | | 10 | | |
| | | B-3 | parts by weight | | | 10 | |
| | | B-4 | parts by weight | | | | |
| | | B-5 | parts by weight | | | | |
| | | B-6 | parts by weight | | | | |
| | | Y-1 | parts by weight | | | | |
| | | Y-2 | parts by weight | | | | |
| | Polymerization initiator | Photopolymerization initiator | parts by weight | 0.2 | 0.5 | 0.2 | 0.2 |
| Production method of resin composition | | | | Product!on method (1) | Production method (1) | Production method (2) | Production method (1) |
| Weight average molecular weight of (meth) acrylic polymer contained in cured body | | | x 10$^4$ | 101 | 83 | 128 | 68 |

(continued)

|  |  |  |  | Example 1 | Example 2 | Example 3 | Example 4 |
|---|---|---|---|---|---|---|---|
| Gel fraction of cured body | % by weight | 2.80 | 6.40 | 1.28 | 8.70 |  |  |
| Melting viscosity of cured body |  | ○○ | ○○ | △ | ○ |  |  |
| Application property of resin composition |  | ○ | ○ | ○ | ○ |  |  |
| Rate of change in thickness before and after curing |  | ○○ | ○ | ○○ | ○○ |  |  |
| Grindability of cured body |  | ○○ | ○○ | ○○ | ○○ |  |  |
| Oil resistance of cured body |  | ○ | ○ | ○ | ○ |  |  |

[Table 8]

| | | | | Example 5 | Example 6 | Example 7 | Example 8 |
|---|---|---|---|---|---|---|---|
| Resin composition | (Meth) acrylic monomer (M) | A-1 | parts by weight | | | | |
| | | A-2 | parts by weight | 100 | | | |
| | | A-3 | parts by weight | | 100 | 100 | |
| | | A-4 | parts by weight | | | | 100 |
| | | A-5 | parts by weight | | | | |
| | | A-6 | parts by weight | | | | |
| | | A-7 | parts by weight | | | | |
| | | X-1 | parts by weight | | | | |
| | | X-2 | parts by weight | | | | |
| | | X-3 | parts by weight | | | | |
| | (Meth) acrylic polymer | B-1 | parts by weight | | | | 30 |
| | | B-2 | parts by weight | | | | |
| | | B-3 | parts by weight | | | 7 | |
| | | B-4 | parts by weight | 5 | | | |
| | | B-5 | parts by weight | | 10 | | |
| | | B-6 | parts by weight | | | | |

(continued)

| | | | | Example 5 | Example 6 | Example 7 | Example 8 |
|---|---|---|---|---|---|---|---|
| | | Y-1 | parts by weight | | | | |
| | | Y-2 | parts by weight | | | | |
| | Polymerization initiator | Photopolymerization initiator | parts by weight | 0.2 | 0.2 | 0.2 | 0.2 |
| Production method of resin composition | | | | Product ion method (1) | Product ion method (1) | Product ion method (2) | Product ion method (2) |
| Weight average molecular weight of (meth) acrylic polymer contained in cured body | | | x $10^4$ | 138 | 95 | 172 | 119 |
| Gel fraction of cured body | | | % by weight | 2.20 | 0.60 | 4.80 | 1.58 |
| Melting viscosity of cured body | | | | △ | ○ | △ | ○ |
| Application property of resin composition | | | | ○ | ○ | ○ | ○ |
| Rate of change in thickness before and after curing | | | | ○○ | ○ | ○○ | ○○ |
| Grindability of cured body | | | | ○○ | △ | ○○ | △ |
| Oil resistance of cured body | | | | ○ | △ | ○ | ○ |

[Table 9]

| | | | | | Example 9 | Example 10 | Example 11 |
|---|---|---|---|---|---|---|---|
| | | (Meth) acrylic monomer (M) | A-1 | parts by weight | | | |
| | | | A-2 | parts by weight | | | |
| | | | A-3 | parts by weight | | | |
| | | | A-4 | parts by weight | | | |
| | | | A-5 | parts by weight | 100 | | |
| | | | A-6 | parts by weight | | 100 | |

(continued)

| | | | | Example 9 | Example 10 | Example 11 |
|---|---|---|---|---|---|---|
| Resin composi tion | | A-7 | parts by weight | | | 100 |
| | | X-1 | parts by weight | | | |
| | | X-2 | parts by weight | | | |
| | | X-3 | parts by weight | | | |
| | (Meth) acr ylic polymer | B-1 | parts by weight | 10 | 10 | 10 |
| | | B-2 | parts by weight | | | |
| | | B-3 | parts by weight | | | |
| | | B-4 | parts by weight | | | |
| | | B-5 | parts by weight | | | |
| | | B-6 | parts by weight | | | |
| | | Y-1 | parts by weight | | | |
| | | Y-2 | parts by weight | | | |
| | Polymeriz ation initiator | Photopoly merizatio n initiator | parts by weight | 0.2 | 0.2 | 0.2 |
| Production method of resin composition | | | | Productio n method (2) | Producti on method (2) | Producti on method (2) |
| Weight average molecular weight of (meth)acrylic polymer contained in cured body | x 10$^4$ | 72 | 108 | 98 | | |
| Gel fraction of cured body | % by weight | 1.50 | 1.76 | 5.40 | | |

(continued)

|  |  |  |  | Example 9 | Example 10 | Example 11 |
|---|---|---|---|---|---|---|
| Melting viscosity of cured body |  | ○ | ○ | △ |  |  |
| Application property of resin composition |  | ○ | ○ | ○ |  |  |
| Rate of change in thickness before and after curing |  | ○ | ○ | ○○ |  |  |
| Grindability of cured body |  | ○○ | ○○ | △ |  |  |
| Oil resistance of cured body |  | ○ | △ | ○ |  |  |

[Table 10]

| | | | | Comparative Example 1 | Comparative Example 2 | Comparative Example 3 | Comparative Example 4 |
|---|---|---|---|---|---|---|---|
| Resin compositio n | (Meth)acrylic monomer (M) | A-1 | parts by weight | | 100 | 100 | |
| | | A-2 | parts by weight | | | | |
| | | A-3 | parts by weight | | | | |
| | | A-4 | parts by weight | | | | |
| | | A-5 | parts by weight | | | | |
| | | A-6 | parts by weight | | | | |
| | | A-7 | parts by weight | | | | |
| | | X-1 | parts by weight | 100 | | | 100 |
| | | X-2 | parts by weight | | | | |
| | | X-3 | parts by weight | | | | |
| | (Meth)acrylic polymer | B-1 | parts by weight | | 1 | | |
| | | B-2 | parts by weight | | | | |
| | | B-3 | parts by weight | 10 | | | |
| | | B-4 | parts by weight | | | | |
| | | B-5 | parts by weight | | | | |
| | | B-6 | parts by weight | | | | |
| | | Y-1 | parts by weight | | | 15 | |
| | | Y-2 | parts by weight | | | | 60 |
| | Polymerizatio n initiator | Photopoly merization initiator | parts by weight | 0.2 | 0.2 | 0.1 | 0.2 |
| Production method of resin composition | | | | Product ion | Product ion | Product ion | Product ion |

(continued)

| | | method (2) | method (1) | method (2) | method (2) |
|---|---|---|---|---|---|
| Weight average molecular weight of (meth)acrylic polymer contained in cured body | x 10$^4$ | 119 | 121 | Insolub le | 48 |
| Gel fraction of cured body | % by weight | 2.17 | 1.57 | | 0.55 |
| Melting viscosity of cured body | | ○ | △ | | ○○ |
| Application property of resin composition | | ○ | × | | ○ |
| Rate of change in thickness before and after curing | | ○○ | - | | ○ |
| Grindability of cured body | | × | △ | | × |
| Oil resistance of cured body | | △ | ○ | | × |

[Table 11]

| | | | | | Comparative Example 5 | Comparative Example 6 | Comparative Example 7 | Comparative Example 8 |
|---|---|---|---|---|---|---|---|---|
| Resin composition | (Meth) acrylic monomer (M) | A-1 | parts by weight | | | | | |
| | | A-2 | parts by weight | | | | | |
| | | A-3 | parts by weight | | | | | |
| | | A-4 | parts by weight | | | | | |
| | | A-5 | parts by weight | | | | | |
| | | A-6 | parts by weight | | | | | |
| | | A-7 | parts by weight | | | | | |
| | | X-1 | parts by weight | | 100 | 100 | | |
| | | X-2 | parts by weight | | | | 100 | |
| | | X-3 | parts by weight | | | | | 100 |
| | (Meth) acrylic polymer | B-1 | parts by weight | | | | 10 | 10 |
| | | B-2 | parts by weight | | | | | |
| | | B-3 | parts by weight | | | | | |
| | | B-4 | parts by weight | | | | | |

(continued)

| | | | | Comparative Example 5 | Comparative Example 6 | Comparative Example 7 | Comparative Example 8 |
|---|---|---|---|---|---|---|---|
| | | B-5 | parts by weight | | | | |
| | | B-6 | parts by weight | | 15 | | |
| | | Y-1 | parts by weight | | | | |
| | | Y-2 | parts by weight | 20 | | | |
| | Polymerization initiator | Photopolymerization initiator | parts by weight | 0.2 | 0.2 | 0.2 | 0.2 |
| Production method of resin composition | | | | Product ion method (2) | Product ion method (1) | Product ion method (2) | Product ion method (2) |
| Weight average molecular weight of (meth) acrylic polymer contained in cured body | | | x 10⁴ | 69 | 89 | 88 | 78 |
| Gel fraction of cured body | | | % by weight | 4.58 | 0.85 | 1.12 | 1.88 |
| Melting viscosity of cured body | | | | ○○ | ○○ | ○○ | ○○ |
| Application property of resin composition | | | | × | ○ | ○ | ○ |
| Rate of change in thickness before and after curing | | | | - | ○ | ○○ | △ |
| Grindability of cured body | | | | × | × | × | ○ |
| Oil resistance of cured body | | | | × | × | × | × |

[Table 12]

| | | | | Comparative Example 9 | Comparative Example 10 |
|---|---|---|---|---|---|
| Resin composition | (Meth) acrylic monomer (M) | A-1 | parts by weight | 100 | 100 |
| | | A-2 | parts by weight | | |
| | | A-3 | parts by weight | | |
| | | A-4 | parts by weight | | |
| | | A-5 | parts by weight | | |
| | | A-6 | parts by weight | | |
| | | A-7 | parts by weight | | |
| | | X-1 | parts by weight | | |
| | | X-2 | parts by weight | | |
| | | X-3 | parts by weight | | |
| | (Meth) acrylic polymer | B-1 | parts by weight | | 35 |
| | | B-2 | parts by weight | | |
| | | B-3 | parts by weight | | |
| | | B-4 | parts by weight | | |
| | | B-5 | parts by weight | | |
| | | B-6 | parts by weight | | |
| | | Y-1 | parts by weight | | |
| | | Y-2 | parts by weight | 10 | |
| | Polymerization initiator | Photopolymerization initiator | parts by weight | 0.2 | 0.2 |
| Production method of resin composition | | | | Production method (2) | Production method (1) |
| Weight average molecular weight of (meth)acrylic | | | x $10^4$ | 52 | 81 |

(continued)

| Production method of resin composition | | | | Production method (2) | Production method (1) |
|---|---|---|---|---|---|
| polymer contained in cured body | | | | | |
| Gel fraction of cured body | % by weight | 1.56 | 2.21 | | |
| Melting viscosity of cured body | | ○○ | ○○ | | |
| Application property of resin composition | | × | × | | |
| Rate of change in thickness before and after curing | | - | - | | |
| Grindability of cured body | | × | × | | |
| Oil resistance of cured body | | × | × | | |

**Claims**

1. A resin composition comprising a (meth)acrylic monomer, and a (meth)acrylic polymer,

   the (meth)acrylic monomer including a first (meth)acrylic monomer,
   the first (meth)acrylic monomer having a glass transition temperature of homopolymer thereof of 65°C or more and 110°C or less,
   a content of the first (meth)acrylic monomer in 100% by weight of the (meth)acrylic monomer being 50% by weight or more and 85% by weight or less,
   the (meth)acrylic polymer having a weight average molecular weight of 400000 or more and 1900000 or less,
   a content of the (meth)acrylic polymer, relative to 100 parts by weight of the (meth)acrylic monomer being 5 parts by weight or more and 30 parts by weight or less.

2. The resin composition according to claim 1, wherein

   the (meth)acrylic monomer includes a second (meth)acrylic monomer,
   the second (meth)acrylic monomer has a glass transition temperature of homopolymer thereof of -70°C or more and -30°C or less, and
   a content of the second (meth)acrylic monomer in 100% by weight of the (meth)acrylic monomer is 39% by weight or less.

3. The resin composition according to claim 1 or 2, wherein the (meth)acrylic monomer includes a cyclic (meth)acrylic monomer that contains an oxygen atom in a heterocycle.

4. The resin composition according to any one of claims 1 to 3, wherein

   the (meth)acrylic monomer includes a third (meth)acrylic monomer, and
   the third (meth)acrylic monomer has a glass transition temperature of homopolymer thereof of more than -30°C and less than 65°C.

5. The resin composition according to claim 4, wherein the third (meth)acrylic monomer includes a cyclic (meth)acrylic monomer that contains an oxygen atom in a heterocycle.

6. The resin composition according to any one of claims 1 to 5, wherein a polymer polymerized from the (meth)acrylic monomer has a glass transition temperature of 40°C or more and 80°C or less.

7. The resin composition according to any one of claims 1 to 6, wherein

   the resin composition comprises a polymerization initiator, and
   the polymerization initiator is a photopolymerization initiator.

8.  A method for producing the resin composition according to any one of claims 1 to 7, the method comprising:

    a step of polymerizing a first composition containing a (meth)acrylic monomer and a polymerization initiator, and
    a step of suspending polymerization reaction of the first composition to obtain a resin composition containing a (meth)acrylic monomer and a (meth)acrylic polymer.

9.  A method for producing the resin composition according to any one of claims 1 to 7, the method comprising:

    a step of polymerizing a first composition containing a (meth)acrylic monomer and a polymerization initiator to obtain a second composition containing a (meth)acrylic polymer, and
    a step of mixing the second composition and a (meth)acrylic monomer to obtain a resin composition containing a (meth)acrylic monomer and a (meth)acrylic polymer.

10. A cured body obtained by curing the resin composition according to any one of claims 1 to 7.

11. The cured body according to claim 10, wherein the cured body is sheet-like.

12. The cured body according to claim 10 or 11, wherein the cured body has a gel fraction of 30% by weight or less.

13. The cured body according to any one of claims 10 to 12, wherein the (meth)acrylic polymer contained in the cured body has a weight average molecular weight of 500000 or more and 2000000 or less.

[FIG. 1.]

(a)

(b)

## INTERNATIONAL SEARCH REPORT

| International application No. |
|---|
| **PCT/JP2021/033508** |

### A. CLASSIFICATION OF SUBJECT MATTER

*C08F 220/10*(2006.01)i
FI: C08F220/10

According to International Patent Classification (IPC) or to both national classification and IPC

### B. FIELDS SEARCHED

Minimum documentation searched (classification system followed by classification symbols)

C08F220/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-047601 A (NISSHIN STEEL CO LTD) 22 February 2007 (2007-02-22) claims, paragraphs [0006]-[0013], [0023], [0032]-[0042] | 1-6, 8-11 |
| X | JP 2011-026551 A (KANEKA CORP) 10 February 2011 (2011-02-10) claims, paragraphs [0008], [0023]-[0024], [0052]-[0053], [0057]-[0058], [0072], [0074]-[0112] | 1-7, 9-13 |
| A | WO 2014/112470 A1 (NITTO DENKO CORPORATION) 24 July 2014 (2014-07-24) entire text | 1-13 |
| A | WO 2019/059693 A2 (LG CHEM, LTD.) 28 March 2019 (2019-03-28) entire text | 1-13 |
| A | JP 2014-133812 A (HITACHI MAXELL LTD) 24 July 2014 (2014-07-24) entire text | 1-13 |
| A | JP 2011-162600 A (TORAY FINE CHEMICALS CO LTD) 25 August 2011 (2011-08-25) entire text | 1-13 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/033508** |

**C.** **DOCUMENTS CONSIDERED TO BE RELEVANT**

| Category* | Citation of document, with indication, where appropriate, of the relevant passages | Relevant to claim No. |
| --- | --- | --- |
| A | JP 2015-157902 A (NITTO DENKO CORP) 03 September 2015 (2015-09-03)<br>    entire text | 1-13 |
| A | JP 2019-214200 A (MITSUBISHI CHEM HOLDINGS CORP) 19 December 2019<br>(2019-12-19)<br>    entire text | 1-13 |

Form PCT/ISA/210 (second sheet) (January 2015)

EP 4 212 559 A1

**INTERNATIONAL SEARCH REPORT**
Information on patent family members

International application No.

**PCT/JP2021/033508**

| Patent document cited in search report | | | Publication date (day/month/year) | Patent family member(s) | | | Publication date (day/month/year) |
|---|---|---|---|---|---|---|---|
| JP | 2007-047601 | A | 22 February 2007 | (Family: none) | | | |
| JP | 2011-026551 | A | 10 February 2011 | (Family: none) | | | |
| WO | 2014/112470 | A1 | 24 July 2014 | (Family: none) | | | |
| WO | 2019/059693 | A2 | 28 March 2019 | US<br>entire text<br>EP<br>CN<br>KR<br>JP | 2020/0292876<br><br>3683244<br>111133012<br>10-1903906<br>2020-532631 | A1<br><br>A2<br>A<br>B1<br>A | |
| JP | 2014-133812 | A | 24 July 2014 | (Family: none) | | | |
| JP | 2011-162600 | A | 25 August 2011 | (Family: none) | | | |
| JP | 2015-157902 | A | 03 September 2015 | (Family: none) | | | |
| JP | 2019-214200 | A | 19 December 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020094193 A